# EUROPEAN PATENT SPECIFICATION

(11) **EP 3 643 536 B1**
(45) Date of publication and mention of the grant of the patent: **04.06.2025**
(21) Application number: 19203867.7
(22) Date of filing: 17.10.2019
(51) Int. Cl.: B60C 15/06, B60C 15/00

(54) **HEAVY DUTY PNEUMATIC TIRE**
SCHWERLASTLUFTREIFEN
PNEUMATIQUE POUR VÉHICULE POIDS LOURDS

(30) Priority: 22.10.2018 JP 2018198187; 22.10.2018 JP 2018198199
(43) Date of publication of application: 29.04.2020
(73) Proprietor: Sumitomo Rubber Industries, Ltd., Kobe-shi, Hyogo-ken 651-0072 (JP)
(72) Inventor: OKABE, Taro, Kobe-shi, Hyogo-ken, 651-0072 (JP)
(74) Representative: Manitz Finsterwald Patent- und Rechtsanwaltspartnerschaft mbB

(56) References cited:
- EP-A1- 3 132 949
- WO-A1-2016/099881
- DE-A1- 102015 122 466
- JP-A- 2017 043 281
- JP-B2- 4 731 831
- US-A1- 2012 318 427

## Description

The present application is based upon and claims the benefit of priority to Japanese Patent Application No.2018-198187, filed October 22, 2018 and Japanese Patent Application No.2018-198199, filed October 22, 2018.

### TECHNICAL FIELD

The present invention relates to heavy duty pneumatic tires.

### BACKGROUND ART

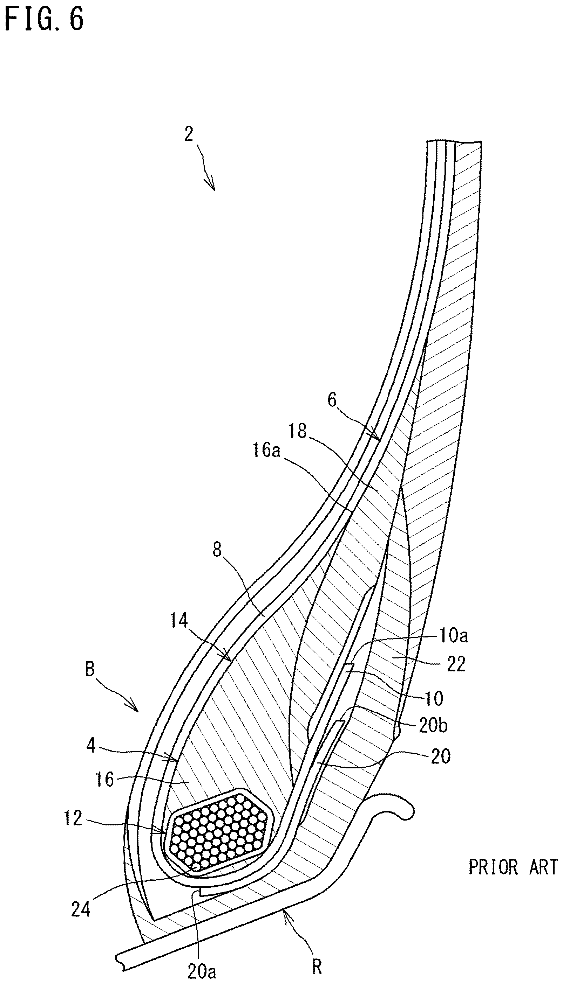

FIG. 6 (not part of the invention) shows a bead 4 portion (hereinafter, also referred to as a bead portion B) of a conventional heavy duty pneumatic tire 2. The bead portion B is fitted to a rim R (normal rim).

In the tire 2, a carcass ply 6 is turned around the bead 4 up from the inner side toward the outer side in the axial direction. The carcass ply 6 includes a ply main body 8 and a turned-up portion 10.

In the tire 2, the bead 4 includes a core 12 and an apex 14. In the tire 2, the apex 14 includes a first apex 16 and a second apex 18 that is more flexible than the first apex 16. As shown in FIG. 6 (not part of the invention), an outer end 16a of the first apex 16 is located outward of an end 10a of the turned-up portion 10 in the radial direction.

To ensure that the bead portion B has desired stiffness, the tire 2 includes a filler 20. The filler 20 includes a large number of steel cords aligned with each other, and a topping rubber, which are not shown.

The filler 20 is located between the turned-up portion 10 and a chafer 22. As shown in FIG. 6 (not part of the invention), an inner end 20a of the filler 20 is located inward of the core 12 of the bead 4 in the radial direction. An outer end 20b of the filler 20 is located inward of the end 10a of the turned-up portion 10. Unlike a conventional filler (hereinafter, also referred to as a normal filler), the filler 20 does not have a structure in which the filler 20 is turned up around the bead 4. The filler 20 is also referred to as a short filler.

The tire 2 is mounted to a vehicle such as a truck and a bus. A large load is applied to the bead portion B of the tire 2. Thus, it is important to improve the durability of the bead portion B, that is, bead durability. For heavy duty pneumatic tires, improving the bead durability by adjusting the configuration of the bead portion B and controlling the stiffness of the bead portion B is considered (for example, Japanese Laid-Open Patent Publication No. 2015-157524).
DE 10 2015 122466 A1 discloses a tire according to the preamble of claim 1. Further tires are disclosed in EP 3132949 A1, JP 2017043281 A, US 2012/318427 A1, and JP 4731831 B2.

### SUMMARY OF INVENTION

### [TECHNICAL PROBLEM]

In the tire 2 in which the above-described short filler is used as the filler 20, force applied to the ply main body 8 that is protected in a tire in which a normal filler is used and that extends radially outward along the bead 4 from the position of the inner end 20a of the filler 20, increases. In the tire 2, the holding force for the bead 4 by the filler 20 decreases, and thus movement of the bead portion B is large. Therefore, movement of the end 10a of the turned-up portion 10 is also large, so that there is a concern that damage called ply turn-up loose (PTL) may occur. The movement of the bead portion B causes heat generation, that is, energy loss, and thus an increase in rolling resistance may also be caused. An increase in the rolling resistance of the tire 2 affects the fuel economy of a vehicle.

If the stiffness of the bead portion B is improved, for example, by increasing the number of turns of a wire 24 in a core 12 that is formed by winding the wire 24, or increasing the volume of the apex 14 located radially outward of the core 12, the bead durability can be improved. However, the weight of the tire 2 increases, and there is also a concern that heat generation, that is, energy loss, caused by movement of the bead portion B, may be increased.

The present invention has been made in view of the above circumstances, and an object of the present invention is to provide a heavy duty pneumatic tire in which improvement of bead durability and reduction of rolling resistance are achieved while weight reduction is achieved.

### [SOLUTION TO PROBLEM]

A heavy duty pneumatic tire according to the present invention is specified in claim 1.

Preferably, in the heavy duty pneumatic tire, when a position, on each side surface of the tire, corresponding to an outer end of a contact surface between the side surface and a flange of a rim to which the tire is fitted, is defined as a flange contact end, in the radial direction, an outer end of the first apex is located inward of the end of the turned-up portion and located outward of the flange contact end.

Preferably, in the heavy duty pneumatic tire, a distance in the radial direction from a radially inner end of the core to an outer end of the first apex is not less than 15 mm and not greater than 45 mm.

Preferably, in the heavy duty pneumatic tire, a distance from an axially inner end of the core to the carcass ply is not less than 1 mm.

Preferably, in the heavy duty pneumatic tire, a recess is provided on a zone of each side surface of the tire between a maximum width position and the end of the turned-up portion.

Preferably, in the heavy duty pneumatic tire, a ratio of a minimum thickness from the ply main body to the recess relative to a virtual thickness, from the ply main body to a virtual side surface obtained on the assumption that the recess is not present, measured along a line segment indicating the minimum thickness is not less than 0.3 and not greater than 0.7.

Preferably, in the heavy duty pneumatic tire, a distance in the radial direction from the end of the turned-up portion to an inner end of the recess is not less than 10 mm and not greater than 20 mm.

Preferably, in the heavy duty pneumatic tire, the recess includes a bottom portion, an outer boundary portion located outward of the bottom portion in the radial direction, and an inner boundary portion located inward of the bottom portion in the radial direction. A profile of the outer boundary portion is represented by a circular arc that projects outward and that has a radius not less than 40 mm. A profile of the inner boundary portion is represented by a circular arc that projects outward and that has a radius not less than 40 mm.

Preferably, in the heavy duty pneumatic tire, a profile of the bottom portion is represented by a circular arc that projects inward.

Preferably, in the heavy duty pneumatic tire, a profile of the bottom portion is represented by a straight line.

A heavy duty pneumatic tire according to another aspect of the present invention includes: a pair of beads; a carcass ply having a ply main body that extends on and between one bead and the other bead, and turned-up portions that are connected to the ply main body and turned around the beads from an inner side toward an outer side in an axial direction; and a pair of fillers that are located outward of the turned-up portions in the axial direction and that include metal cords. Each bead includes a core, a first apex that surrounds the core, and a second apex that is located outward of the first apex in a radial direction. An outer periphery of the first apex has a rounded contour, and the first apex is harder than the second apex. A recess is provided on a zone of each side surface of the tire between a maximum width position and an end of the turned-up portion.

Preferably, in the heavy duty pneumatic tire, when a position, on each side surface of the tire, corresponding to an outer end of a contact surface between the side surface and a flange of a rim to which the tire is fitted, is defined as a flange contact end, in the radial direction, an outer end of the first apex is located inward of the end of the turned-up portion and located outward of the flange contact end.

Preferably, in the heavy duty pneumatic tire, a distance in the radial direction from a radially inner end of the core to an outer end of the first apex is not less than 15 mm and not greater than 45 mm.

Preferably, in the heavy duty pneumatic tire, a distance from an axially inner end of the core to the carcass ply is not less than 1 mm.

Preferably, in the heavy duty pneumatic tire, a ratio of a minimum thickness from the ply main body to the recess relative to a virtual thickness, from the ply main body to a virtual side surface obtained on the assumption that the recess is not present, measured along a line segment indicating the minimum thickness is not less than 0.3 and not greater than 0.7.

Preferably, in the heavy duty pneumatic tire, a distance in the radial direction from the end of the turned-up portion to an inner end of the recess is not less than 10 mm and not greater than 20 mm.

Preferably, in the heavy duty pneumatic tire, the recess includes a bottom portion, an outer boundary portion located outward of the bottom portion in the radial direction, and an inner boundary portion located inward of the bottom portion in the radial direction. A profile of the outer boundary portion is represented by a circular arc that projects outward and that has a radius not less than 40 mm. A profile of the inner boundary portion is represented by a circular arc that projects outward and that has a radius not less than 40 mm.

Preferably, in the heavy duty pneumatic tire, a profile of the bottom portion is represented by a circular arc that projects inward.

Preferably, in the heavy duty pneumatic tire, a profile of the bottom portion is represented by a straight line.

### [ADVANTAGEOUS EFFECTS OF INVENTION]

In the heavy duty pneumatic tire of the present invention, improvement of bead durability and reduction of rolling resistance are achieved while weight reduction is achieved.

### BRIEF DESCRIPTION OF DRAWINGS

FIG. 1 is a cross-sectional view of a part of a heavy duty pneumatic tire according to an embodiment of the present invention.
FIG. 2 is a partial cross-sectional view of a bead portion of the tire in FIG. 1.
FIG. 3 is a partial cross-sectional view of a modification of the bead portion of the tire in FIG. 1.
FIG. 4 is a cross-sectional view of a part of a heavy duty pneumatic tire according to an embodiment of the present invention based on another aspect.
FIG. 5 is a partial cross-sectional view of a bead portion of the tire in FIG. 4.
FIG. 6 is a partial cross-sectional view of a bead portion of a conventional heavy duty pneumatic tire (not part of the invention).

### DESCRIPTION OF EMBODIMENTS

The following will describe in detail the present invention based on preferred embodiments with appropriate reference to the drawings.

In the present invention, a state where a tire is mounted on a normal rim, the internal pressure of the tire is adjusted to a normal internal pressure, and no load is applied to the tire is referred to as a normal state. In the present invention, unless otherwise specified, the dimensions and angles of each component of the tire are measured in the normal state.

The normal rim means a rim specified in a standard on which the tire is based. The "standard rim" in the JATMA standard, the "Design Rim" in the TRA standard, and the "Measuring Rim" in the ETRTO standard are normal rims.

The normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

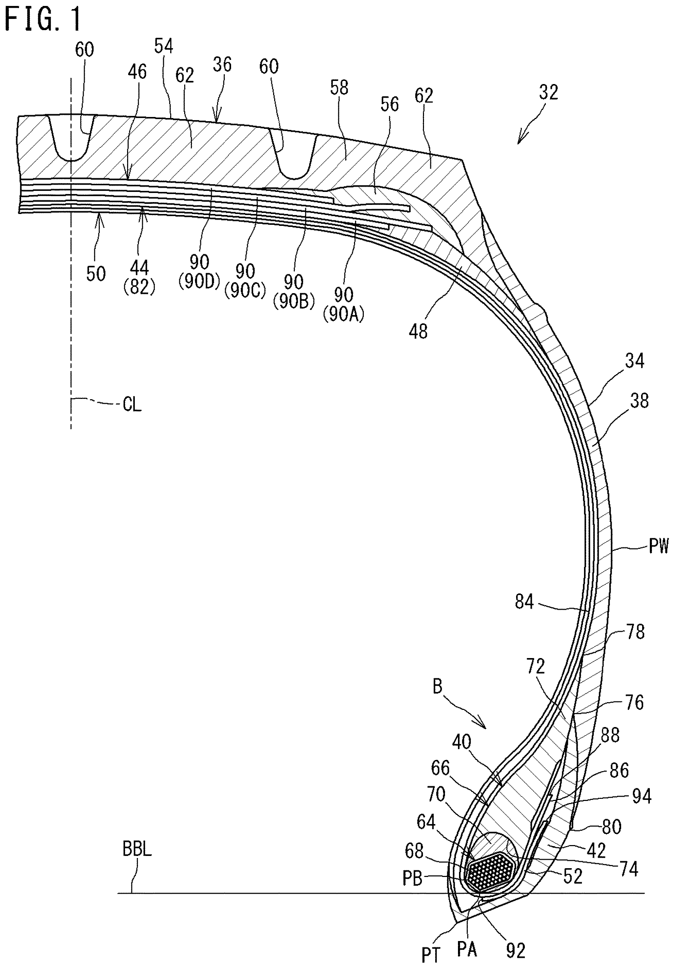

FIG. 1 shows a part of a heavy duty pneumatic tire 32 (hereinafter, simply referred to as "tire 32") according to an embodiment of the present invention. The tire 32 is mounted to a heavy duty vehicle such as a truck and a bus.

FIG. 1 shows a part of a cross-section of the tire 32 along a plane including the rotation axis of the tire 32. In FIG. 1, the right-left direction is the axial direction of the tire 32, and the up-down direction is the radial direction of the tire 32. The direction perpendicular to the surface of the sheet of FIG. 1 is the circumferential direction of the tire 32. In FIG. 1, an alternate long and short dash line CL represents the equator plane of the tire 32.

In FIG. 1, a solid line BBL extending in the axial direction is a bead base line. The bead base line BBL is a line that defines the rim diameter (see JATMA or the like) of a rim (normal rim).

In FIG. 1, reference character PW represents an axially outer end of the tire 32. The outer end PW is specified on the basis of a virtual side surface obtained on the assumption that decorations such as patterns and letters are not present on a side surface 34 of the tire 32. The distance in the axial direction from one outer end PW to the other outer end PW is the maximum width of the tire 32, that is, the cross-sectional width (see JATMA or the like) of the tire 32. The outer end PW is a position at which the tire 32 has the maximum width (hereinafter, also referred to as a maximum width position of the tire 32).

The tire 32 includes a tread 36, a pair of sidewalls 38, a pair of beads 40, a pair of chafers 42, a carcass 44, a belt 46, a pair of cushion layers 48, an inner liner 50, and a pair of fillers 52.

An outer surface 54 of the tread 36 comes into contact with a road surface. The outer surface 54 of the tread 36 is a tread surface. The above-described side surface 34 is connected to an end of the tread surface 54 and extends radially inward.

The tread 36 includes a base portion 56 and a cap portion 58. In the tire 32, a pair of base portions 56 are provided. These base portions 56 are disposed at an interval in the axial direction. Each base portion 56 covers an end portion of the belt 46. The base portion 56 is formed from a crosslinked rubber. The cap portion 58 is located radially outward of each base portion 56. The cap portion 58 covers the pair of base portions 56 and the entirety of the belt 46. The outer surface of the cap portion 58 forms the above-described tread surface 54. The cap portion 58 is formed from a crosslinked rubber.

In the tire 32, at least three circumferential grooves 60 are formed on the tread 36. Accordingly, in the tread 36, at least four circumferential land portions 62 are formed.

Each sidewall 38 is connected to an end of the tread 36. The sidewall 38 extends radially inward from the end of the tread 36. The sidewall 38 is formed from a crosslinked rubber. The outer surface of the sidewall 38 forms the side surface 34 of the tire 32.

Each bead 40 is located radially inward of the sidewall 38. The bead 40 includes a core 64 and an apex 66.

The core 64 extends in the circumferential direction. The core 64 includes a wound wire 68 made of steel. The core 64 has a substantially hexagonal cross-sectional shape. In the tire 32, the core 64 is located outward of the bead base line BBL in the radial direction. In the cross-section of the core 64, a corner portion indicated by reference character PA is the radially inner end of the core 64, and a corner portion indicated by reference character PB is the axially inner end of the core 64. Each corner portion of the core 64 is specified on the basis of the contour of a cross-section bundle of the wire 68 included in the cross-section of the core 64.

The apex 66 is located radially outward of the core 64. The apex 66 extends radially outward from the core 64. In the tire 32, the apex 66 includes a first apex 70 and a second apex 72. Each of the first apex 70 and the second apex 72 is formed from a crosslinked rubber. The first apex 70 is harder than the second apex 72. The apex 66 is composed of the hard first apex 70 and the flexible second apex 72.

In the tire 32, the hardness of the first apex 70 is set to be not less than 83 and not greater than 98. The hardness of the second apex 72 is set to be not less than 45 and not greater than 65. In the present invention, the "hardness" is measured according to JIS K6253 under a temperature condition of 23°C using a type A durometer.

The first apex 70 surrounds the core 64. In other words, the first apex 70 is located around the core 64. The second apex 72 is located radially outward of the first apex 70. The second apex 72 extends radially outward from the first apex 70. The second apex 72 is tapered outward in the radial direction.

As shown in FIG. 1, in the tire 32, the outer periphery of the first apex 70 has a rounded contour. The first apex 70 has a round shape. Thus, a surface of the second apex 72 that is in contact with the first apex 70, that is, a bottom surface 74 of the second apex 72, has a shape projecting radially outward in the cross-section shown in FIG. 1.

Each chafer 42 is located axially outward of the bead 40. The chafer 42 is located radially inward of the sidewall 38. The chafer 42 comes into contact with a rim. The chafer 42 is formed from a crosslinked rubber. In the tire 32, an outer end 76 of the chafer 42 is located inward of an outer end 78 of the second apex 72, that is, an outer end 78 of the apex 66, in the radial direction.

In FIG. 1, reference character PT represents a toe of the tire 32. The outer surface of the chafer 42 from the toe PT to an inner end 80 of the sidewall 38 forms a part of the side surface 34.

The carcass 44 is located inward of the tread 36, each sidewall 38, and each chafer 42. The carcass 44 includes at least one carcass ply 82. The carcass 44 of the tire 32 is composed of one carcass ply 82.

The carcass ply 82 includes a large number of carcass cords aligned with each other, which are not shown. The carcass cords are covered with a topping rubber. Each carcass cord intersects the equator plane CL. In the tire 32, the angle of each carcass cord relative to the equator plane CL is not less than 70° and not greater than 90°. The carcass 44 of the tire 32 has a radial structure. In the tire 32, the material of the carcass cords is steel. A cord formed from an organic fiber may be used as each carcass cord.

In the tire 32, the carcass ply 82 is turned up around each bead 40 (specifically, each core 64) from the inner side toward the outer side in the axial direction. The carcass ply 82 has: a ply main body 84 that extends on and between one bead 40 and the other bead 40; and a pair of turned-up portions 86 that are connected to the ply main body 84 and turned up around the respective beads 40 from the inner side toward the outer side in the axial direction. In the tire 32, an end 88 of each turned-up portion 86 is located between the outer end 76 of the chafer 42 and the inner end 80 of the sidewall 38 in the radial direction.

The belt 46 is located radially inward of the tread 36. The belt 46 is located radially outward of the carcass 44.

In the tire 32, the belt 46 includes four layers 90 layered in the radial direction. In the tire 32, the number of layers 90 forming the belt 46 is not particularly limited. The configuration of the belt 46 is determined as appropriate in consideration of the specifications of the tire 32.

Each layer 90 includes a large number of belt cords aligned with each other, which are not shown. These belt cords are covered with a topping rubber. In the tire 32, the material of the belt cords is steel.

In each layer 90, each belt cord is tilted relative to the equator plane CL. The belt cords in one layer 90 intersect the belt cords in another layer 90 layered on the one layer 90.

In the tire 32, among the four layers 90, a second layer 90B located between a first layer 90A and a third layer 90C has the maximum width in the axial direction. A fourth layer 90D located at the outermost side in the radial direction has the minimum width in the axial direction.

Each cushion layer 48 is located between the belt 46 and the carcass 44 at an end portion of the belt 46. The cushion layer 48 is formed from a crosslinked rubber.

The inner liner 50 is located inward of the carcass 44. The inner liner 50 forms the inner surface of the tire 32. The inner liner 50 is formed from a crosslinked rubber that has an excellent air blocking property. The inner liner 50 maintains the internal pressure of the tire 32.

Each filler 52 is located at a bead 40 portion. The filler 52 is located outward of the bead 40 in the axial direction. As shown in FIG. 1, the filler 52 is located between the turned-up portion 86 and the chafer 42.

The filler 52 includes a large number of metal cords aligned with each other, which are not shown. In the tire 32, the material of the metal cords is steel. In the tire 32, the metal cords included in the filler 52 are steel cords. In the filler 52, the metal cords are covered with a topping rubber.

In the tire 32, in the radial direction, a first end 92 (also referred to as an inner end) of the filler 52 is located inward of the bead base line BBL. The first end 92 of the filler 52 is located between the bead base line BBL and the toe PT in the radial direction. In the tire 32, in the axial direction, the first end 92 of the filler 52 is disposed at a position that coincides with the position of the inner end PA of the core 64, that is, the position of the corner portion PA. A second end 94 (also referred to as an outer end) of the filler 52 is located inward of the end 88 of the turned-up portion 86 in the radial direction. The second end 94 of the filler 52 is located between the end 88 of the turned-up portion 86 and the bead base line BBL in the radial direction. The filler 52 is a short filler.

In the tire 32, a so-called short filler is used as each filler 52. The filler 52 contributes to weight reduction. In the tire 32, the core 64 is surrounded by the hard first apex 70 the outer periphery of which has a rounded contour. In the tire 32, falling of the bead 40 portion (hereinafter, also referred to as a bead portion B) due to application of a load is inhibited, and thus good bead durability is obtained. In addition to falling of the bead portion B being inhibited, the first apex 70 is formed with a small volume, and thus the rolling resistance of the tire 32 can be reduced. In the tire 32, improvement of bead durability and reduction of rolling resistance are achieved while weight reduction is achieved.

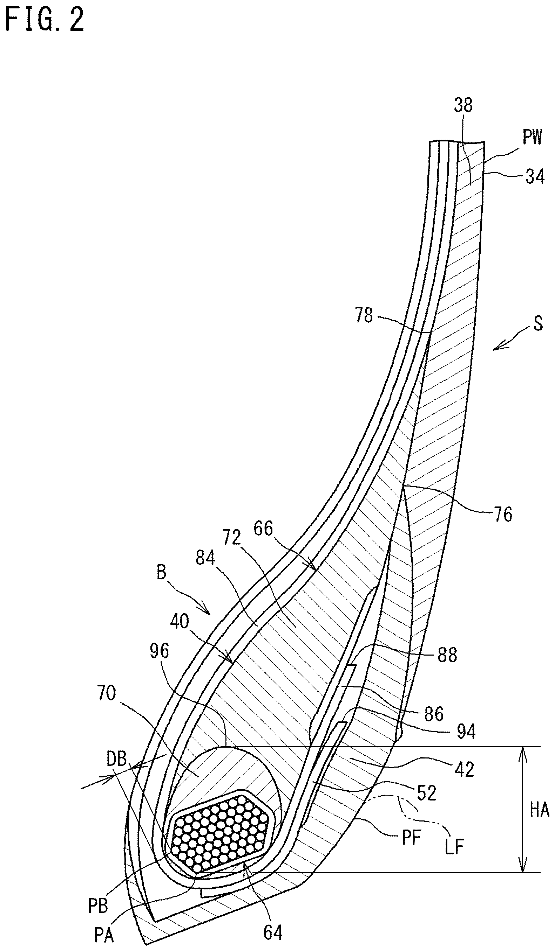

FIG. 2 shows a part of the cross-section of the tire 32 shown in FIG. 1. In FIG. 2, the bead portion B of the tire 32 is shown. In FIG. 2, the right-left direction is the axial direction of the tire 32, and the up-down direction is the radial direction of the tire 32. The direction perpendicular to the surface of the sheet of FIG. 2 is the circumferential direction of the tire 32.

In the tire 32, in the radial direction, an outer end 96 of the first apex 70 is located inward of the end 88 of the turned-up portion 86. In the tire 32, concentration of strain on the end 88 of the turned-up portion 86 is inhibited. In the tire 32, good bead durability is obtained. Since the first apex 70 is formed with a small volume, the rolling resistance of the tire 32 can be further reduced. From this viewpoint, in the tire 32, in the radial direction, the outer end 96 of the first apex 70 is preferably located inward of the end 88 of the turned-up portion 86.

In FIG. 2, reference character PF represents a position, on the side surface 34, corresponding to the radially outer end of a contact surface between the tire 32 and a flange LF of the rim, that is, a flange contact end. In the tire 32, the outer end 96 of the first apex 70 is located outward of the flange contact end PF in the radial direction. In the tire 32, the stiffness of the first apex 70 is appropriately maintained, and protrusion of the side surface 34 at a portion outward of the flange contact end PF is effectively inhibited. In the tire 32, good bead durability is effectively maintained. From this viewpoint, in the tire 32, in the radial direction, the outer end 96 of the first apex 70 is preferably located outward of the flange contact end PF.

In FIG. 2, a double-headed arrow HA represents the distance in the radial direction from the radially inner end PA of the core 64 to the outer end 96 of the first apex 70. A double-headed arrow DB represents the distance from the axially inner end PB of the core 64 to the carcass ply 82. The distance DB is represented as a shortest distance.

In the tire 32, the distance HA in the radial direction from the radially inner end PA of the core 64 to the outer end 96 of the first apex 70 is preferably not less than 15 mm and preferably not greater than 45 mm. When the distance HA is set to be not less than 15 mm, falling of the bead portion B due to application of a load is inhibited. Thus, in the tire 32, good bead durability is obtained. From this viewpoint, the distance HA is more preferably not less than 20 mm and further preferably not less than 25 mm. When the distance HA is set to be not greater than 45 mm, concentration of strain on the end 88 of the turned-up portion 86 is inhibited in the tire 32. In the tire 32, good bead durability is obtained. Since the first apex 70 is formed with a small volume, the rolling resistance of the tire 32 can be further reduced. From this viewpoint, the distance HA is more preferably not greater than 40 mm and further preferably not greater than 35 mm.

In the tire 32, the distance DB from the axially inner end PB of the core 64 to the carcass ply 82 is preferably not less than 1 mm. When the distance DB is set to be not less than 1 mm, rubbing between the carcass ply 82 and the core 64 in a state where a load during running is applied is prevented. In the tire 32, the carcass cords near the axially inner end PB of the core 64 are effectively prevented from being cut. From this viewpoint, the distance DB is preferably not less than 1.5 mm. From the viewpoint that the first apex 70 is formed with an appropriate volume and influence of the first apex 70 on rolling resistance is inhibited, the distance DB is preferably not greater than 5 mm.

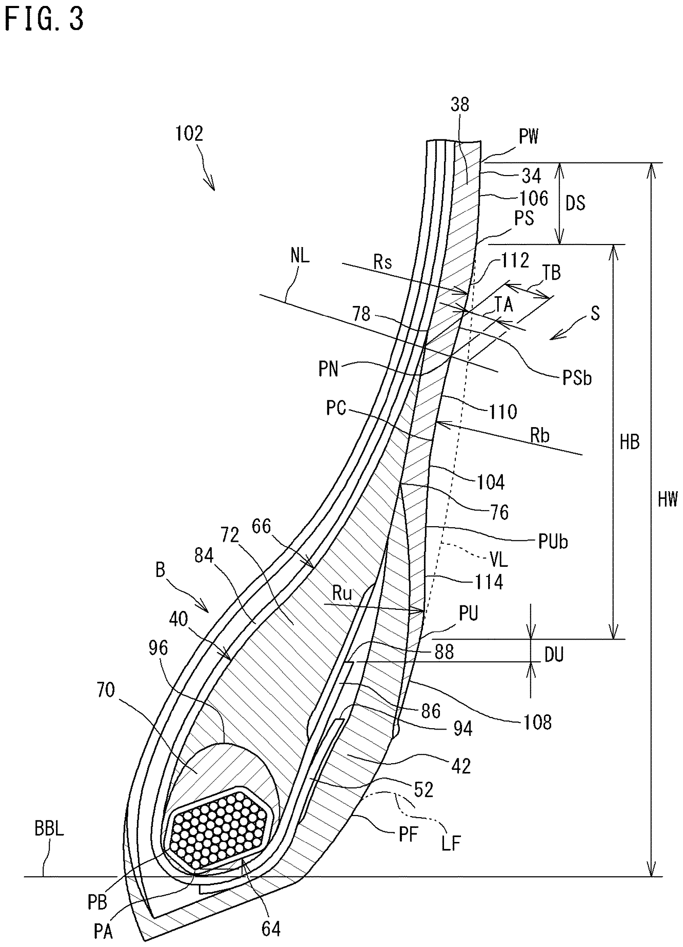

FIG. 3 shows a part of a heavy duty pneumatic tire 102 (hereinafter, simply referred to as "tire 102") according to another embodiment of the present invention.

In FIG. 3, a bead portion B of the tire 102 is shown. In FIG. 3, the right-left direction is the axial direction of the tire 102, and the up-down direction is the radial direction of the tire 102. The direction perpendicular to the surface of the sheet of FIG. 3 is the circumferential direction of the tire 102.

In FIG. 3, a modification of the bead portion B of the tire 32 shown in FIG. 1 is shown. The tire 102 has the same structure as the tire 32 shown in FIG. 1, except that a recess is provided on the bead portion B. In FIG. 3, members that are the same as the members of the tire 32 shown in FIG. 1 are designated by the same reference characters, and the description thereof is omitted.

In the tire 102, a recess 104 is provided on the side surface 34. In the tire 102, the recess 104 is provided on the sidewall 38 which forms a part of the side surface 34. As shown in FIG. 3, the recess 104 has a shape that projects inward. The recess 104 extends in the circumferential direction without interruption.

In FIG. 3, reference character PS represents an outer end of the recess 104. Reference character PU represents an inner end of the recess 104. In the tire 102, in the radial direction, the outer end PS of the recess 104 is located inward of the maximum width position PW. The inner end PU of the recess 104 is located outward of the end 88 of the turned-up portion 86 in the radial direction. In the tire 102, the recess 104 is provided on a zone of the side surface 34 between the maximum width position PW and the end 88 of the turned-up portion 86.

In the tire 102, similar to the tire 32 shown in FIG. 1, a so-called short filler is used as each filler 52. The filler 52 contributes to weight reduction. In the tire 102, the core 64 is surrounded by the hard first apex 70 the outer periphery of which has a rounded contour. Falling-down of the bead portion B due to application of a load is inhibited, and thus good bead durability is obtained in the tire 102. Furthermore, since falling of the bead portion B is inhibited and the first apex 70 is also formed with a small volume, the rolling resistance of the tire 102 can be reduced. In the tire 102, improvement of bead durability and reduction of rolling resistance are achieved while weight reduction is achieved.

When a load is applied to the tire 102 that is mounted on a rim, the rubber moves toward the vicinity in which the end 88 of the turned-up portion 86 and the second end 94 of the filler 52 are located, in the tire 102. In accordance with this movement, the ply main body 84 moves axially outward. As described above, in the tire 102, the recess 104 is located on the zone between the maximum width position PW and the end 88 of the turned-up portion 86. The recess 104 inhibits movement of the rubber in the vicinity in which the end 88 of the turned-up portion 86 and the second end 94 of the filler 52 are located, and also inhibits movement of the ply main body 84. The recess 104 inhibits movement of the rubber at a portion radially outward of the end 88 of the turned-up portion 86 when a load is applied to the tire 102.

In the tire 102, the recess 104, which is provided on the zone of the side surface 34 between the maximum width position PW and the end 88 of the turned-up portion 86, contributes to weight reduction. As described above, the recess 104 inhibits movement of the rubber at the portion radially outward of the end 88 of the turned-up portion 86. Since movement of the turned-up portion 86 is inhibited, damage such as ply turn-up loose is less likely to occur in the tire 102. This movement inhibition also inhibits heat generation caused by deformation.

In the tire 102, the height in the radial direction of the first apex 70 is low. In the tire 102, a region that can contribute to bending can be sufficiently ensured in a sidewall 38 portion, that is, in a side portion S, and the contour of the ply main body 84 extending along the apex 66 is easily set. In the tire 102, protrusion of the side surface 34 outward in the axial direction is inhibited, and thus an amount of strain applied to the recess 104 is reduced. In the tire 102, damage such as a crack at the recess 104 is less likely to occur. In the tire 102, the above-described effect achieved by the recess 104 is sufficiently exhibited. In the tire 102, improvement of bead durability and reduction of rolling resistance are achieved while weight reduction is achieved.

In FIG. 3, a dotted line VL represents a virtual side surface obtained on the assumption that the recess 104 is not present on the side surface 34. The virtual side surface VL is a part of the above-described virtual side surface used for specifying the maximum width position PW. A solid line NL represents a line normal to the ply main body 84. A double-headed arrow TA represents a thickness, from the ply main body 84 to the recess 104, measured along the normal line NL. In the tire 102, the thickness TA is the minimum thickness from the ply main body 84 to the recess 104. A double-headed arrow TB represents a virtual thickness, from the ply main body 84 to the virtual side surface VL, measured along a line segment indicating the minimum thickness TA, that is, along the normal line NL.

In the tire 102, the ratio of the minimum thickness TA to the virtual thickness TB is preferably not less than 0.3 and preferably not greater than 0.7. When this ratio is set to be not less than 0.3, an increase in strain near the bottom of the recess 104 is inhibited, and the minimum thickness TA becomes a necessary thickness. In the tire 102, occurrence of damage such as a crack at the recess 104 is inhibited. From this viewpoint, this ratio is more preferably not less than 0.4. When this ratio is set to be not greater than 0.7, movement of the rubber forming the sidewall 38 toward the rim flange LF side when a load is applied is inhibited. In the tire 102, the recess 104 effectively inhibits movement of the rubber at the portion radially outward of the end 88 of the turned-up portion 86. In the tire 102, the bead durability is effectively improved, and the rolling resistance is effectively reduced. From this viewpoint, this ratio is more preferably not greater than 0.6.

In FIG. 3, a double-headed arrow DU represents the distance in the radial direction from the end 88 of the turned-up portion 86 to the inner end PU of the recess 104. A double-headed arrow DS represents the distance in the radial direction from the maximum width position PW to the outer end PS of the recess 104.

In the tire 102, the distance DU in the radial direction from the end 88 of the turned-up portion 86 to the inner end PU of the recess 104 is preferably not less than 10 mm and preferably not greater than 20 mm. When the distance DU is set to be not less than 10 mm, the recess 104 is located at an appropriate interval from the end 88 of the turned-up portion 86, and thus interference between the recess 104 and the turned-up portion 86 is prevented. Since concentration of strain on the end 88 of the turned-up portion 86 is inhibited and the effect achieved by the recess 104 is sufficiently exhibited, the bead durability is effectively improved, and the rolling resistance is effectively reduced, in the tire 102. When the distance DU is set to be not greater than 20 mm, the recess 104 having a sufficient size is ensured on the zone between the maximum width position PW and the end 88 of the turned-up portion 86. In this case as well, the effect achieved by the recess 104 is sufficiently exhibited, and thus the bead durability is effectively improved, and the rolling resistance is effectively reduced, in the tire 102.

In the tire 102, the distance DS in the radial direction from the maximum width position PW to the outer end PS of the recess 104 is preferably not less than 10 mm and preferably not greater than 20 mm. When the distance DS is set to be not less than 10 mm, the recess 104 is located at an appropriate interval from the maximum width position PW. In the tire 102, the sidewall 38 at the maximum width position PW has an appropriate thickness, and thus good cut resistance is maintained. When the distance DS is set to be not greater than 20 mm, the recess 104 having a sufficient size is ensured on the zone between the maximum width position PW and the end 88 of the turned-up portion 86. The effect achieved by the recess 104 is sufficiently exhibited, and thus the bead durability is effectively improved, and the rolling resistance is effectively reduced, in the tire 102.

In the tire 102, a portion, of the side surface 34, radially inward of the maximum width position PW includes the above-described recess 104, an outer portion 106 extending radially outward from the outer end PS of the recess 104, and an inner portion 108 extending radially inward from the inner end PU of the recess 104.

The above-described virtual side surface VL is located between the outer portion 106 and the inner portion 108. The outer end PS of the recess 104 is the boundary between the outer portion 106 and the virtual side surface VL. The inner end PU of the recess 104 is the boundary between the inner portion 108 and the virtual side surface VL. In the tire 102, the profile of the virtual side surface VL and the profile of the outer portion 106 are tangent to each other at the boundary PS. The profile of the virtual side surface VL and the profile of the inner portion 108 are tangent to each other at the boundary PU.

In the tire 102, the recess 104 includes a bottom portion 110, an outer boundary portion 112, and an inner boundary portion 114.

The outer boundary portion 112 extends between the bottom portion 110 and the above-described outer portion 106. The profile of the outer boundary portion 112 is tangent to the profile of the outer portion 106 at the outer end PS. The outer end PS is also the boundary between the outer boundary portion 112 and the outer portion 106.

The inner boundary portion 114 extends between the bottom portion 110 and the above-described inner portion 108. The profile of the inner boundary portion 114 is tangent to the profile of the inner portion 108 at the inner end PU. The inner end PU is also the boundary between the inner boundary portion 114 and the inner portion 108.

In FIG. 3, reference character PSb represents an outer end of the bottom portion 110. Reference character PUb represents an inner end of the bottom portion 110. In the tire 102, the outer boundary portion 112 is located radially outward of the bottom portion 110. The profile of the bottom portion 110 is tangent to the profile of the outer boundary portion 112 at the outer end PSb. The outer end PSb is the boundary between the bottom portion 110 and the outer boundary portion 112. The inner boundary portion 114 is located radially inward of the bottom portion 110. The profile of the bottom portion 110 is tangent to the profile of the inner boundary portion 114 at the inner end PUb. The inner end PUb is the boundary between the bottom portion 110 and the inner boundary portion 114.

In the cross-section of the tire 102 shown in FIG. 3, the profile of the outer boundary portion 112 is represented by a circular arc that projects outward. In FIG. 3, an arrow Rs represents the radius of the circular arc that represents the profile of the outer boundary portion 112.

In the tire 102, the radius Rs of the circular arc that represents the profile of the outer boundary portion 112 is preferably not less than 40 mm. Accordingly, concentration of strain on the outer boundary portion 112 is inhibited. In the tire 102, the effect achieved by the recess 104 is sufficiently exhibited, and thus the bead durability is effectively improved, and the rolling resistance is effectively reduced. The upper limit of the radius Rs is determined as appropriate in consideration of the configuration of the profile of the side surface 34.

In the cross-section of the tire 102 shown in FIG. 3, the profile of the inner boundary portion 114 is represented by a circular arc that projects outward. In FIG. 3, an arrow Ru represents the radius of the circular arc that represents the profile of the inner boundary portion 114.

In the tire 102, the radius Ru of the circular arc that represents the profile of the inner boundary portion 114 is preferably not less than 40 mm. Accordingly, concentration of strain on the inner boundary portion 114 is inhibited. In the tire 102, the effect achieved by the recess 104 is sufficiently exhibited, and thus the bead durability is effectively improved, and the rolling resistance is effectively reduced. The upper limit of the radius Ru is determined as appropriate in consideration of the configuration of the profile of the side surface 34.

In the tire 102, from the viewpoint that the recess 104 effectively contributes to improvement of bead durability and reduction of rolling resistance, more preferably, the radius Rs of the circular arc that represents the profile of the outer boundary portion 112 is not less than 40 mm, and the radius Ru of the circular arc that represents the profile of the inner boundary portion 114 is not less than 40 mm.

In the tire 102, the profile of the bottom portion 110 is represented by a circular arc that projects inward. Accordingly, force applied to the bottom portion 110 is effectively distributed over the entirety of the bottom portion 110. In the tire 102, concentration of strain on a specific location of the bottom portion 110 to cause damage such as a crack is prevented. In the tire 102, the effect achieved by the recess 104 is sufficiently exhibited, and thus the bead durability is effectively improved, and the rolling resistance is effectively reduced.

In FIG. 3, an arrow Rb represents the radius of a circular arc that represents the profile of the bottom portion 110. In the tire 102, the radius Rb is determined as appropriate in consideration of the above-described distance DU in the radial direction from the end 88 of the turned-up portion 86 to the inner end PU of the recess 104, the above-described distance DS in the radial direction from the maximum width position PW to the outer end PS of the recess 104, the radius Rs of the circular arc that represents the profile of the outer boundary portion 112, and the radius Ru of the circular arc that represents the profile of the inner boundary portion 114. From the viewpoint of prevention of damage due to concentration of stress on the bottom portion 110, the radius Rb is preferably not less than 40 mm.

Although not shown, in the tire 102, the profile of the bottom portion 110 of the recess 104 may be represented by a straight line, not by a circular arc. In this case, the profile of the bottom portion 110 does not have to be tangent to the profile of the outer boundary portion 112 at the outer end PSb. The profile of the bottom portion 110 does not have to be tangent to the profile of the inner boundary portion 114 at the inner end PUb. Even in the case where the profile of the bottom portion 110 is represented by a straight line, force applied to the bottom portion 110 is effectively distributed over the entirety of the bottom portion 110, and occurrence of damage at the bottom portion 110 is prevented. In the tire 102, from the viewpoint that the effect achieved by the recess 104 is more sufficiently exhibited, the profile of the bottom portion 110 of the recess 104 is preferably represented by a circular arc.

In FIG. 3, reference character PN represents the point of intersection of the normal line NL and the recess 104. The point of intersection PN is a position, on the recess 104, at which the thickness from the ply main body 84 to the recess 104 is the minimum thickness, that is, a minimum thickness position. Reference character PC represents the center position of the recess 104. The center position PC is specified at a position at which the length of the recess 104 measured on the cross-section shown in FIG. 3 is halved.

In the tire 102, the minimum thickness position PN of the recess 104 is located outward of the center position PC of the recess 104 in the radial direction. In the tire 102, force applied to the recess 104 is effectively distributed over the entirety of the recess 104. In the tire 102, concentration of strain on a specific location of the recess 104 to cause damage such as a crack is prevented. In the tire 102, the effect achieved by the recess 104 is sufficiently exhibited, and thus the bead durability is effectively improved, and the rolling resistance is effectively reduced. From this viewpoint, the minimum thickness position PN of the recess 104 is preferably located outward of the center position PC of the recess 104 in the radial direction.

In the tire 102, the center position PC of the recess 104 is located between the outer end 78 of the apex 66 and the outer end 76 of the chafer 42 in the radial direction. In the tire 102, the recess 104 effectively inhibits movement of the rubber at the portion radially outward of the end 88 of the turned-up portion 86. In the tire 102, the bead durability is effectively improved, and the rolling resistance is effectively reduced. From this viewpoint, the center position PC of the recess 104 is preferably located between the outer end 78 of the apex 66 and the outer end 76 of the chafer 42 in the radial direction.

In FIG. 3, a double-headed arrow HW represents the distance in the radial direction from the bead base line BBL to the maximum width position PW. A double-headed arrow HB represents the distance in the radial direction from the inner end PU of the recess 104 to the outer end PS of the recess 104.

In the tire 102, the ratio of the distance HB in the radial direction to the distance HW in the radial direction is preferably not less than 0.45 and preferably not greater than 0.65. When this ratio is set to be not less than 0.45, the size of the recess 104 is sufficiently ensured. The recess 104 effectively inhibits movement of the rubber at the portion radially outward of the end 88 of the turned-up portion 86. In the tire 102, the bead durability is effectively improved, and the rolling resistance is effectively reduced. From this viewpoint, this ratio is more preferably not less than 0.50. When this ratio is set to be not greater than 0.65, the size of the recess 104 is appropriately maintained. In the tire 102, influence of the recess 104 on stiffness is effectively inhibited. From this viewpoint, this ratio is more preferably not greater than 0.60.

Meanwhile, in the case where a nominal aspect ratio of the tire 32 or the tire 102 is not greater than 65% and a nominal cross-sectional width of the tire 32 or the tire 102 is not less than 385 mm, in the tire 32 or the tire 102, a carcass height represented as a height in the radial direction from the bead base line BBL to the point of intersection of the equator plane CL and the inner surface of the carcass 44 is low with respect to the width in the axial direction of the tread 36, and thus a region in which application of a load can be absorbed by bending (that is, the above-described region that can contribute to bending) is narrow as compared to a normal tire. Therefore, it is difficult to ensure sufficient bead durability in the tire 32 or the tire 102.

As described above, the height in the radial direction of the first apex 70 in each of the tire 32 and the tire 102 is low. In the tire 102, the recess 104 is further provided on the zone of the side surface 34 between the maximum width position PW and the end 88 of the turned-up portion 86. In the tire 32, the first apex 70 contributes to bending, and, in the tire 102, the first apex 70 and the recess 104 contribute to bending. In the tire 102, the recess 104 inhibits movement of the rubber at the portion radially outward of the end 88 of the turned-up portion 86, and also contributes to weight reduction. Thus, even in the case where the nominal aspect ratio of the tire 32 or the tire 102 is not greater than 65% and the nominal cross-sectional width of the tire 32 or the tire 102 is not less than 385 mm, in the tire 32 or the tire 102, improvement of bead durability and reduction of rolling resistance are achieved while weight reduction is achieved.

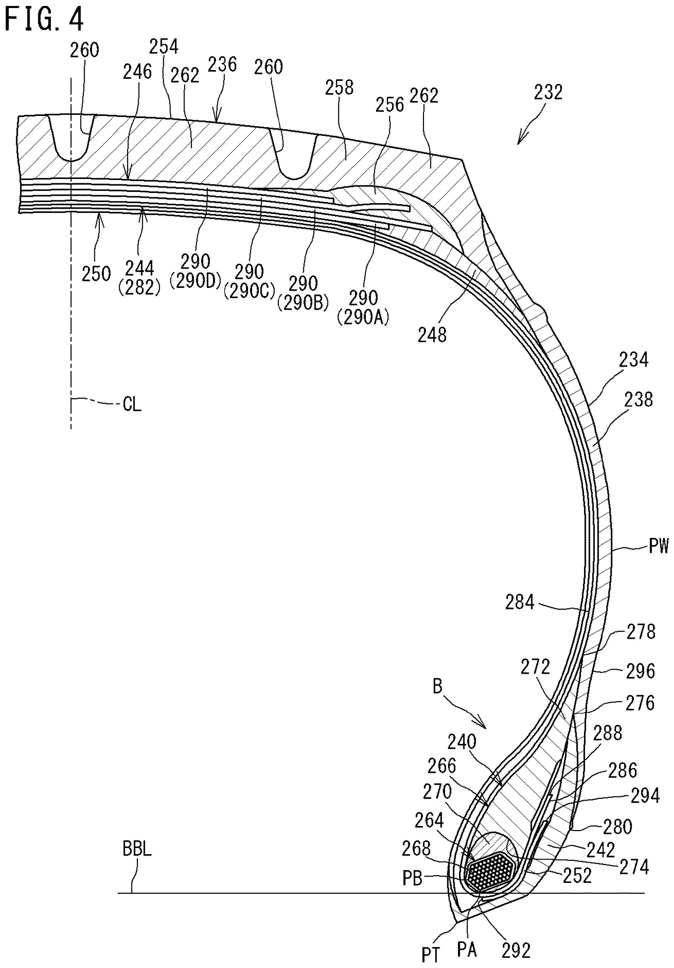

FIG. 4 shows a part of a heavy duty pneumatic tire 232 (hereinafter, simply referred to as "tire 232") according to an embodiment of the present invention based on another aspect. The tire 232 is mounted to a heavy duty vehicle such as a truck and a bus.

FIG. 4 shows a part of a cross-section of the tire 232 along a plane including the rotation axis of the tire 232. In FIG. 4, the right-left direction is the axial direction of the tire 232, and the up-down direction is the radial direction of the tire 232. The direction perpendicular to the surface of the sheet of FIG. 4 is the circumferential direction of the tire 232. In FIG. 4, an alternate long and short dash line CL represents the equator plane of the tire 232.

In FIG. 4, a solid line BBL extending in the axial direction is a bead base line. The bead base line BBL is a line that defines the rim diameter (see JATMA or the like) of a rim (normal rim).

In FIG. 4, reference character PW represents an axially outer end of the tire 232. The outer end PW is specified on the basis of a virtual side surface obtained on the assumption that decorations such as patterns and letters are not present on a side surface 234 of the tire 232. The distance in the axial direction from one outer end PW to the other outer end PW is the maximum width of the tire 232, that is, the cross-sectional width (see JATMA or the like) of the tire 232. The outer end PW is a position at which the tire 232 has the maximum width (hereinafter, also referred to as a maximum width position of the tire 232).

The tire 232 includes a tread 236, a pair of sidewalls 238, a pair of beads 240, a pair of chafers 242, a carcass 244, a belt 246, a pair of cushion layers 248, an inner liner 250, and a pair of fillers 252.

An outer surface 254 of the tread 236 comes into contact with a road surface. The outer surface 254 of the tread 236 is a tread surface. The above-described side surface 234 is connected to an end of the tread surface 254 and extends radially inward.

The tread 236 includes a base portion 256 and a cap portion 258. **In** the tire 232, a pair of base portions 256 are provided. These base portions 256 are disposed at an interval in the axial direction. Each base portion 256 covers an end portion of the belt 246. The base portion 256 is formed from a crosslinked rubber. The cap portion 258 is located radially outward of each base portion 256. The cap portion 258 covers the pair of base portions 256 and the entirety of the belt 246. The outer surface of the cap portion 258 forms the above-described tread surface 254. The cap portion 258 is formed from a crosslinked rubber.

In the tire 232, at least three circumferential grooves 260 are formed on the tread 236. Accordingly, in the tread 236, at least four circumferential land portions 262 are formed.

Each sidewall 238 is connected to an end of the tread 236. The sidewall 238 extends radially inward from the end of the tread 236. The sidewall 238 is formed from a crosslinked rubber. The outer surface of the sidewall 238 forms the side surface 234 of the tire 232.

Each bead 240 is located radially inward of the sidewall 238. The bead 240 includes a core 264 and an apex 266.

The core 264 extends in the circumferential direction. The core 264 includes a wound wire 268 made of steel. The core 264 has a substantially hexagonal cross-sectional shape. In the tire 232, the core 264 is located outward of the bead base line BBL in the radial direction. In the cross-section of the core 264, a corner portion indicated by reference character PA is the radially inner end of the core 264, and a corner portion indicated by reference character PB is the axially inner end of the core 264. Each corner portion of the core 264 is specified on the basis of the contour of a cross-section bundle of the wire 268 included in the cross-section of the core 264.

The apex 266 is located radially outward of the core 264. The apex 266 extends radially outward from the core 264. In the tire 232, the apex 266 includes a first apex 270 and a second apex 272. Each of the first apex 270 and the second apex 272 is formed from a crosslinked rubber. The first apex 270 is harder than the second apex 272. The apex 266 is composed of the hard first apex 270 and the flexible second apex 272.

In the tire 232, the hardness of the first apex 270 is set to be not less than 83 and not greater than 98. The hardness of the second apex 272 is set to be not less than 45 and not greater than 65. In the present invention, the "hardness" is measured according to JIS K6253 under a temperature condition of 23°C using a type A durometer.

The first apex 270 surrounds the core 264. In other words, the first apex 270 is located around the core 264. The second apex 272 is located radially outward of the first apex 270. The second apex 272 extends radially outward from the first apex 270. The second apex 272 is tapered outward in the radial direction.

As shown in FIG. 4, in the tire 232, the outer periphery of the first apex 270 has a rounded contour. The first apex 270 has a round shape. Thus, a surface of the second apex 272 that is in contact with the first apex 270, that is, a bottom surface 274 of the second apex 272, has a shape projecting radially outward in the cross-section shown in FIG. 4.

Each chafer 242 is located axially outward of the bead 240. The chafer 242 is located radially inward of the sidewall 238. The chafer 242 comes into contact with a rim. The chafer 242 is formed from a crosslinked rubber. **In** the tire 232, an outer end 276 of the chafer 242 is located inward of an outer end 278 of the second apex 272, that is, an outer end 278 of the apex 266, in the radial direction.

In FIG. 4, reference character PT represents a toe of the tire 232. The outer surface of the chafer 242 from the toe PT to an inner end 280 of the sidewall 238 forms a part of the side surface 234.

The carcass 244 is located inward of the tread 236, each sidewall 238, and each chafer 242. The carcass 244 includes at least one carcass ply 282. The carcass 244 of the tire 232 is composed of one carcass ply 282.

The carcass ply 282 includes a large number of carcass cords aligned with each other, which are not shown. The carcass cords are covered with a topping rubber. Each carcass cord intersects the equator plane CL. In the tire 232, the angle of each carcass cord relative to the equator plane CL is not less than 70° and not greater than 90°. The carcass 244 of the tire 232 has a radial structure. In the tire 232, the material of the carcass cords is steel. A cord formed from an organic fiber may be used as each carcass cord.

In the tire 232, the carcass ply 282 is turned up around each bead 240 (specifically, each core 264) from the inner side toward the outer side in the axial direction. The carcass ply 282 has: a ply main body 284 that extends on and between one bead 240 and the other bead 240; and a pair of turned-up portions 286 that are connected to the ply main body 284 and turned up around the respective beads 240 from the inner side toward the outer side in the axial direction. In the tire 232, an end 288 of each turned-up portion 286 is located between the outer end 276 of the chafer 242 and the inner end 280 of the sidewall 238 in the radial direction.

The belt 246 is located radially inward of the tread 236. The belt 246 is located radially outward of the carcass 244.

In the tire 232, the belt 246 includes four layers 290 layered in the radial direction. In the tire 232, the number of layers 290 forming the belt 246 is not particularly limited. The configuration of the belt 246 is determined as appropriate in consideration of the specifications of the tire 232.

Each layer 290 includes a large number of belt cords aligned with each other, which are not shown. These belt cords are covered with a topping rubber. In the tire 232, the material of the belt cords is steel.

In each layer 290, each belt cord is tilted relative to the equator plane CL. The belt cords in one layer 290 intersect the belt cords in another layer 290 layered on the one layer 290.

In the tire 232, among the four layers 290, a second layer 290B located between a first layer 290A and a third layer 290C has the maximum width in the axial direction. A fourth layer 290D located at the outermost side in the radial direction has the minimum width in the axial direction.

Each cushion layer 248 is located between the belt 246 and the carcass 244 at an end portion of the belt 246. The cushion layer 248 is formed from a crosslinked rubber.

The inner liner 250 is located inward of the carcass 244. The inner liner 250 forms the inner surface of the tire 232. The inner liner 250 is formed from a crosslinked rubber that has an excellent air blocking property. The inner liner 250 maintains the internal pressure of the tire 232.

Each filler 252 is located at a bead 240 portion. The filler 252 is located outward of the bead 240 in the axial direction. As shown in FIG. 4, the filler 252 is located between the turned-up portion 286 and the chafer 242.

The filler 252 includes a large number of metal cords aligned with each other, which are not shown. In the tire 232, the material of the metal cords is steel. In the tire 232, the metal cords included in the filler 252 are steel cords. In the filler 252, the metal cords are covered with a topping rubber.

In the tire 232, in the radial direction, a first end 292 (also referred to as an inner end) of the filler 252 is located inward of the bead base line BBL. The first end 292 of the filler 252 is located between the bead base line BBL and the toe PT in the radial direction. In the tire 232, in the axial direction, the first end 292 of the filler 252 is disposed at a position that coincides with the position of the inner end PA of the core 264, that is, the position of the corner portion PA. A second end 294 (also referred to as an outer end) of the filler 252 is located inward of the end 288 of the turned-up portion 286 in the radial direction. The second end 294 of the filler 252 is located between the end 288 of the turned-up portion 286 and the bead base line BBL in the radial direction. The filler 252 is a short filler.

In the tire 232, each filler 252 may be formed such that the filler 252 has a structure in which the filler 252 is turned up around the bead 240. In this case, the first end 292 of the filler 252 is disposed axially inward of the ply main body 284 at the radially outer side of the core 264. The second end 294 of the filler 252 is disposed at a position similar to that of the second end 294 of the above-described short filler. The filler 252 having such a structure is also referred to as a normal filler. From the viewpoint of weight reduction, in the tire 232, the filler 252 is preferably the above-described short filler.

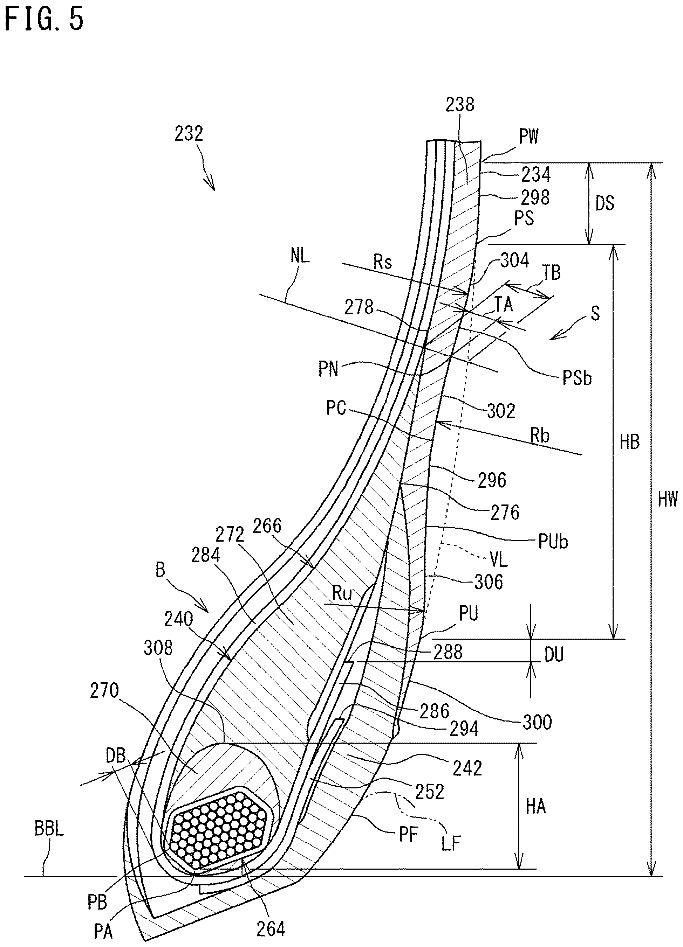

FIG. 5 shows a part of the cross-section of the tire 232 in FIG. 4. In FIG. 5, a bead 240 portion (hereinafter, also referred to as a bead portion B) of the tire 232 is shown. In FIG. 5, the right-left direction is the axial direction of the tire 232, and the up-down direction is the radial direction of the tire 232. The direction perpendicular to the surface of the sheet of FIG. 5 is the circumferential direction of the tire 232.

In the tire 232, a recess 296 is provided on the side surface 234. In the tire 232, the recess 296 is provided on the sidewall 238 which forms a part of the side surface 234. As shown in FIG. 5, the recess 296 has a shape that projects inward. The recess 296 extends in the circumferential direction without interruption.

In FIG. 5, reference character PS represents an outer end of the recess 296. Reference character PU represents an inner end of the recess 296. In the tire 232, in the radial direction, the outer end PS of the recess 296 is located inward of the maximum width position PW. The inner end PU of the recess 296 is located outward of the end 288 of the turned-up portion 286 in the radial direction. In the tire 232, the recess 296 is provided on a zone of the side surface 234 between the maximum width position PW and the end 288 of the turned-up portion 286.

When a load is applied to the tire 232 that is mounted on a rim, the rubber moves toward the vicinity in which the end 288 of the turned-up portion 286 and the second end 294 of the filler 252 are located, in the tire 232. In accordance with this movement, the ply main body 284 moves axially outward. As described above, in the tire 232, the recess 296 is located on the zone between the maximum width position PW and the end 288 of the turned-up portion 286. The recess 296 inhibits movement of the rubber in the vicinity in which the end 288 of the turned-up portion 286 and the second end 294 of the filler 252 are located, and also inhibits movement of the ply main body 284. The recess 296 inhibits movement of the rubber at a portion radially outward of the end 288 of the turned-up portion 286 when a load is applied to the tire 232.

In the tire 232, the recess 296, which is provided on the zone of the side surface 234 between the maximum width position PW and the end 288 of the turned-up portion 286, contributes to weight reduction. As described above, the recess 296 inhibits movement of the rubber at the portion radially outward of the end 288 of the turned-up portion 286. Since movement of the turned-up portion 286 is inhibited, damage such as ply turn-up loose is less likely to occur in the tire 232. This movement inhibition also inhibits heat generation caused by deformation.

In the tire 232, the core 264 is surrounded by the hard first apex 270 the outer periphery of which has a rounded contour. Falling-down of the bead portion B due to application of a load is inhibited, and thus good bead durability is obtained in this tire.

In the tire 232, the height in the radial direction of the first apex 270 is low. In the tire 232, a region that can contribute to bending can be sufficiently ensured in a sidewall 238 portion, that is, in a side portion S, and the contour of the ply main body 284 extending along the apex 266 is easily set. In the tire 232, protrusion of the side surface 234 outward in the axial direction is inhibited, and thus an amount of strain applied to the recess 296 is reduced. In the tire 232, damage such as a crack at the recess 296 is less likely to occur. In the tire 232, the above-described effect achieved by the recess 296 is sufficiently exhibited. Furthermore, the first apex 270 is formed with a small volume, and thus influence of the first apex 270 on rolling resistance is effectively inhibited.

In the tire 232, improvement of bead durability and reduction of rolling resistance are achieved while weight reduction is achieved.

In FIG. 5, a dotted line VL represents a virtual side surface obtained on the assumption that the recess 296 is not present on the side surface 234. The virtual side surface VL is a part of the above-described virtual side surface used for specifying the maximum width position PW. A solid line NL represents a line normal to the ply main body 284. A double-headed arrow TA represents a thickness, from the ply main body 284 to the recess 296, measured along the normal line NL. In the tire 232, the thickness TA is represented as the minimum thickness from the ply main body 284 to the recess 296. A double-headed arrow TB represents a virtual thickness, from the ply main body 284 to the virtual side surface VL, measured along a line segment indicating the minimum thickness TA, that is, along the normal line NL.

In the tire 232, the ratio of the minimum thickness TA to the virtual thickness TB is preferably not less than 0.3 and preferably not greater than 0.7. When this ratio is set to be not less than 0.3, an increase in strain near the bottom of the recess 296 is inhibited, and the minimum thickness TA becomes a necessary thickness. In the tire 232, occurrence of damage such as a crack at the recess 296 is inhibited. From this viewpoint, this ratio is more preferably not less than 0.4. When this ratio is set to be not greater than 0.7, movement of the rubber forming the sidewall 238 toward the rim flange LF side when a load is applied is inhibited. In the tire 232, the recess 296 effectively inhibits movement of the rubber at the portion radially outward of the end 288 of the turned-up portion 286. In the tire 232, the bead durability is effectively improved, and the rolling resistance is effectively reduced. From this viewpoint, this ratio is more preferably not greater than 0.6.

In FIG. 5, a double-headed arrow DU represents the distance in the radial direction from the end 288 of the turned-up portion 286 to the inner end PU of the recess 296. A double-headed arrow DS represents the distance in the radial direction from the maximum width position PW to the outer end PS of the recess 296.

In the tire 232, the distance DU in the radial direction from the end 288 of the turned-up portion 286 to the inner end PU of the recess 296 is preferably not less than 10 mm and preferably not greater than 20 mm. When the distance DU is set to be not less than 10 mm, the recess 296 is located at an appropriate interval from the end 288 of the turned-up portion 286, and thus interference between the recess 296 and the turned-up portion 286 is prevented. Since concentration of strain on the end 288 of the turned-up portion 286 is inhibited and the effect achieved by the recess 296 is sufficiently exhibited, the bead durability is effectively improved, and the rolling resistance is effectively reduced, in the tire 232. When the distance DU is set to be not greater than 20 mm, the recess 296 having a sufficient size is ensured on the zone between the maximum width position PW and the end 288 of the turned-up portion 286. In this case as well, the effect achieved by the recess 296 is sufficiently exhibited, and thus the bead durability is effectively improved, and the rolling resistance is effectively reduced, in the tire 232.

In the tire 232, the distance DS in the radial direction from the maximum width position PW to the outer end PS of the recess 296 is preferably not less than 10 mm and preferably not greater than 20 mm. When the distance DS is set to be not less than 10 mm, the recess 296 is located at an appropriate interval from the maximum width position PW. In the tire 232, the sidewall 238 at the maximum width position PW has an appropriate thickness, and thus good cut resistance is maintained. When the distance DS is set to be not greater than 20 mm, the recess 296 having a sufficient size is ensured on the zone between the maximum width position PW and the end 288 of the turned-up portion 286. The effect achieved by the recess 296 is sufficiently exhibited, and thus the bead durability is effectively improved, and the rolling resistance is effectively reduced, in the tire 232.

In the tire 232, a portion, of the side surface 234, radially inward of the maximum width position PW includes the above-described recess 296, an outer portion 298 extending radially outward from the outer end PS of the recess 296, and an inner portion 300 extending radially inward from the inner end PU of the recess 296.

The above-described virtual side surface VL is located between the outer portion 298 and the inner portion 300. The outer end PS of the recess 296 is the boundary between the outer portion 298 and the virtual side surface VL. The inner end PU of the recess 296 is the boundary between the inner portion 300 and the virtual side surface VL. In the tire 232, the profile of the virtual side surface VL and the profile of the outer portion 298 are tangent to each other at the boundary PS. The profile of the virtual side surface VL and the profile of the inner portion 300 are tangent to each other at the boundary PU.

In the tire 232, the recess 296 includes a bottom portion 302, an outer boundary portion 304, and an inner boundary portion 306.

The outer boundary portion 304 extends between the bottom portion 302 and the above-described outer portion 298. The profile of the outer boundary portion 304 is tangent to the profile of the outer portion 298 at the outer end PS. The outer end PS is also the boundary between the outer boundary portion 304 and the outer portion 298.

The inner boundary portion 306 extends between the bottom portion 302 and the above-described inner portion 300. The profile of the inner boundary portion 306 is tangent to the profile of the inner portion 300 at the inner end PU. The inner end PU is also the boundary between the inner boundary portion 306 and the inner portion 300.

In FIG. 5, reference character PSb represents an outer end of the bottom portion 302. Reference character PUb represents an inner end of the bottom portion 302. In the tire 232, the outer boundary portion 304 is located radially outward of the bottom portion 302. The profile of the bottom portion 302 is tangent to the profile of the outer boundary portion 304 at the outer end PSb. The outer end PSb is the boundary between the bottom portion 302 and the outer boundary portion 304. The inner boundary portion 306 is located radially inward of the bottom portion 302. The profile of the bottom portion 302 is tangent to the profile of the inner boundary portion 306 at the inner end PUb. The inner end PUb is the boundary between the bottom portion 302 and the inner boundary portion 306.

In the cross-section of the tire 232 shown in FIG. 5, the profile of the outer boundary portion 304 is represented by a circular arc that projects outward. In FIG. 5, an arrow Rs represents the radius of the circular arc that represents the profile of the outer boundary portion 304.

In the tire 232, the radius Rs of the circular arc that represents the profile of the outer boundary portion 304 is preferably not less than 40 mm. Accordingly, concentration of strain on the outer boundary portion 304 is inhibited. In the tire 232, the effect achieved by the recess 296 is sufficiently exhibited, and thus the bead durability is effectively improved, and the rolling resistance is effectively reduced. The upper limit of the radius Rs is determined as appropriate in consideration of the configuration of the profile of the side surface 234.

In the cross-section of the tire 232 shown in FIG. 5, the profile of the inner boundary portion 306 is represented by a circular arc that projects outward. In FIG. 5, an arrow Ru represents the radius of the circular arc that represents the profile of the inner boundary portion 306.

In the tire 232, the radius Ru of the circular arc that represents the profile of the inner boundary portion 306 is preferably not less than 40 mm. Accordingly, concentration of strain on the inner boundary portion 306 is inhibited. In the tire 232, the effect achieved by the recess 296 is sufficiently exhibited, and thus the bead durability is effectively improved, and the rolling resistance is effectively reduced. The upper limit of the radius Ru is determined as appropriate in consideration of the configuration of the profile of the side surface 234.

In the tire 232, from the viewpoint that the recess 296 effectively contributes to improvement of bead durability and reduction of rolling resistance, more preferably, the radius Rs of the circular arc that represents the profile of the outer boundary portion 304 is not less than 40 mm, and the radius Ru of the circular arc that represents the profile of the inner boundary portion 306 is not less than 40 mm.

In the tire 232, the profile of the bottom portion 302 is represented by a circular arc that projects inward. Accordingly, force applied to the bottom portion 302 is effectively distributed over the entirety of the bottom portion 302. In the tire 232, concentration of strain on a specific location of the bottom portion 302 to cause damage such as a crack is prevented. In the tire 232, the effect achieved by the recess 296 is sufficiently exhibited, and thus the bead durability is effectively improved, and the rolling resistance is effectively reduced.

In FIG. 5, an arrow Rb represents the radius of a circular arc that represents the profile of the bottom portion 302. In the tire 232, the radius Rb is determined as appropriate in consideration of the above-described distance DU in the radial direction from the end 288 of the turned-up portion 286 to the inner end PU of the recess 296, the above-described distance DS in the radial direction from the maximum width position PW to the outer end PS of the recess 296, the radius Rs of the circular arc that represents the profile of the outer boundary portion 304, and the radius Ru of the circular arc that represents the profile of the inner boundary portion 306. From the viewpoint of prevention of damage due to concentration of stress on the bottom portion 302, the radius Rb is preferably not less than 40 mm.

Although not shown, in the tire 232, the profile of the bottom portion 302 of the recess 296 may be represented by a straight line, not by a circular arc. In this case, the profile of the bottom portion 302 does not have to be tangent to the profile of the outer boundary portion 304 at the outer end PSb. The profile of the bottom portion 302 does not have to be tangent to the profile of the inner boundary portion 306 at the inner end PUb. Even in the case where the profile of the bottom portion 302 is represented by a straight line, force applied to the bottom portion 302 is effectively distributed over the entirety of the bottom portion 302, and occurrence of damage at the bottom portion 302 is prevented. In the tire 232, from the viewpoint that the effect achieved by the recess 296 is more sufficiently exhibited, the profile of the bottom portion 302 of the recess 296 is preferably represented by a circular arc.

In FIG. 5, reference character PN represents the point of intersection of the normal line NL and the recess 296. The point of intersection PN is a position, on the recess 296, at which the thickness from the ply main body 284 to the recess 296 is the minimum thickness, that is, a minimum thickness position. Reference character PC represents the center position of the recess 296. The center position PC is specified at a position at which the length of the recess 296 measured on the cross-section shown in FIG. 5 is halved.

In the tire 232, the minimum thickness position PN of the recess 296 is located outward of the center position PC of the recess 296 in the radial direction. In the tire 232, force applied to the recess 296 is effectively distributed over the entirety of the recess 296. In the tire 232, concentration of strain on a specific location of the recess 296 to cause damage such as a crack is prevented. In the tire 232, the effect achieved by the recess 296 is sufficiently exhibited, and thus the bead durability is effectively improved, and the rolling resistance is effectively reduced. From this viewpoint, the minimum thickness position PN of the recess 296 is preferably located outward of the center position PC of the recess 296 in the radial direction.

In the tire 232, the center position PC of the recess 296 is located between the outer end 278 of the apex 266 and the outer end 276 of the chafer 242 in the radial direction. In the tire 232, the recess 296 effectively inhibits movement of the rubber at the portion radially outward of the end 288 of the turned-up portion 286. In the tire 232, the bead durability is effectively improved, and the rolling resistance is effectively reduced. From this viewpoint, the center position PC of the recess 296 is preferably located between the outer end 278 of the apex 266 and the outer end 276 of the chafer 242 in the radial direction.

In FIG. 5, a double-headed arrow HW represents the distance in the radial direction from the bead base line BBL to the maximum width position PW. A double-headed arrow HB represents the distance in the radial direction from the inner end PU of the recess 296 to the outer end PS of the recess 296.

In the tire 232, the ratio of the distance HB in the radial direction to the distance HW in the radial direction is preferably not less than 0.45 and preferably not greater than 0.65. When this ratio is set to be not less than 0.45, the size of the recess 296 is sufficiently ensured. The recess 296 effectively inhibits movement of the rubber at the portion radially outward of the end 288 of the turned-up portion 286. In the tire 232, the bead durability is effectively improved, and the rolling resistance is effectively reduced. From this viewpoint, this ratio is more preferably not less than 0.50. When this ratio is set to be not greater than 0.65, the size of the recess 296 is appropriately maintained. In the tire 232, influence of the recess 296 on stiffness is effectively inhibited. From this viewpoint, this ratio is more preferably not greater than 0.60.

In the tire 232, in the radial direction, an outer end 308 of the first apex 270 is located inward of the end 288 of the turned-up portion 286. In the tire 232, concentration of strain on the end 288 of the turned-up portion 286 is inhibited. In addition, in the tire 232, a region that can contribute to bending can be sufficiently ensured in the side portion S, and the contour of the ply main body 284 extending along the apex 266 is easily set. In the tire 232, protrusion of the side surface 234 outward in the axial direction is effectively inhibited, and thus an amount of strain applied to the recess 296 is sufficiently reduced. In the tire 232, damage such as a crack at the recess 296 is less likely to occur, and thus the above-described effect achieved by the recess 296 is sufficiently exhibited. Furthermore, since protrusion of the side surface 234 outward in the axial direction is inhibited and the first apex 270 is also formed with a small volume, the rolling resistance of the tire 232 can be reduced. From this viewpoint, in the radial direction, the outer end 308 of the first apex 270 is preferably located inward of the end 288 of the turned-up portion 286.

In FIG. 5, reference character PF represents a position, on the side surface 234, corresponding to the radially outer end of a contact surface between the tire 232 and a flange LF of the rim, that is, a flange contact end. In the tire 232, the outer end 308 of the first apex 270 is located outward of the flange contact end PF in the radial direction. In the tire 232, the stiffness of the first apex 270 is appropriately maintained, and protrusion of the side surface 234 at a portion outward of the flange contact end PF is effectively inhibited. In the tire 232, good bead durability is effectively maintained. From this viewpoint, the outer end 308 of the first apex 270 is preferably located outward of the flange contact end PF in the radial direction.

In FIG. 5, a double-headed arrow HA represents the distance in the radial direction from the radially inner end PA of the core 264 to the outer end 308 of the first apex 270. A double-headed arrow DB represents the distance from the axially inner end PB of the core 264 to the carcass ply 282. The distance DB is represented as a shortest distance.

In the tire 232, the distance HA in the radial direction from the radially inner end PA of the core 264 to the outer end 308 of the first apex 270 is preferably not less than 15 mm and preferably not greater than 45 mm. When the distance HA is set to be not less than 15 mm, the stiffness of the first apex 270 is appropriately maintained, and protrusion of the side surface 234 at the portion radially outward of the flange contact end PF is effectively inhibited. In the tire 232, good bead durability is effectively maintained. From this viewpoint, the distance HA is more preferably not less than 20 mm and further preferably not less than 25 mm. When the distance HA is set to be not greater than 45 mm, a region that can contribute to bending can be sufficiently ensured in the side portion S, and the contour of the ply main body 284 extending along the apex 266 is easily set, in the tire 232. In the tire 232, protrusion of the side surface 234 outward in the axial direction is inhibited, and thus an amount of strain applied to the recess 296 is reduced. In the tire 232, occurrence of damage such as a crack at the recess 296 is inhibited, and thus the effect achieved by the recess 296 is sufficiently exhibited. From this viewpoint, the distance HA is more preferably not greater than 40 mm and further preferably not greater than 35 mm.

In the tire 232, the distance DB from the axially inner end PB of the core 264 to the carcass ply 282 is preferably not less than 1 mm. When the distance DB is set to be not less than 1 mm, rubbing between the carcass ply 282 and the core 264 in a state where a load during running is applied is prevented. In the tire 232, the carcass cords near the axially inner end PB of the core 264 are effectively prevented from being cut. From this viewpoint, the distance DB is preferably not less than 1.5 mm. From the viewpoint that the first apex 270 is formed with an appropriate volume and influence of the first apex 270 on rolling resistance is inhibited, the distance DB is preferably not greater than 5 mm.

Meanwhile, in the case where a nominal aspect ratio of the tire 232 is not greater than 65% and a nominal cross-sectional width of the tire 232 is not less than 385 mm, in the tire 232, a carcass height represented as a height in the radial direction from the bead base line BBL to the point of intersection of the equator plane CL and the inner surface of the carcass 244 is low with respect to the width in the axial direction of the tread 236. In the tire 232, a region in which application of a load can be absorbed by bending (that is, the above-described region that can contribute to bending) is narrow as compared to a normal tire. Therefore, it is difficult to ensure sufficient bead durability in the tire 232.

As described above, the height in the radial direction of the first apex 270 in the tire 232 is low, and the recess 296 is further provided on the zone of the side surface 234 between the maximum width position PW and the end 288 of the turned-up portion 286. The first apex 270 and the recess 296 contribute to bending of the tire 232. In addition, the recess 296 inhibits movement of the rubber at the portion radially outward of the end 288 of the turned-up portion 286, and also contributes to weight reduction. Thus, even in the case where the nominal aspect ratio of the tire 232 is not greater than 65% and the nominal cross-sectional width of the tire 232 is not less than 385 mm, in the tire 232, improvement of bead durability and reduction of rolling resistance are achieved while weight reduction is achieved.

As is obvious from the above description, according to the present invention, a heavy duty pneumatic tire, in which improvement of bead durability and reduction of rolling resistance are achieved while weight reduction is achieved, is obtained.

The embodiments disclosed above are merely illustrative in all aspects and are not restrictive. The technical scope of the present invention is not limited to the above-described embodiments, and all changes which come within the scope of the configurations recited in the claims are therefore intended to be included therein.

### EXAMPLES

The following will describe the present invention in further detail by means of examples, etc., but the present invention is not limited to these examples.

### [Experiment 1]

### [Example 1a]

A heavy duty pneumatic tire (tire size = 11R22.5) having the basic structure shown in FIG. 1 and FIG. 2 and having the specifications shown in Table 1 below was obtained.

In Example 1a, the outer end of the first apex was disposed between the end of the turned-up portion and the flange contact end PF in the radial direction. In Table 1, the outer end of the first apex being located inward of the end of the turned-up portion is represented as "in", and the outer end of the first apex being located outward of the flange contact end is represented as "out".

In Example 1a, the distance HA in the radial direction from the radially inner end PA of the core to the outer end of the first apex was set to 30 mm. The distance DB from the axially inner end PB of the core to the carcass ply was set to 1.5 mm.

### [Comparative Example 1a]

A tire of Comparative Example 1a is the conventional tire (tire size = 11R22.5) shown in FIG. 6 (not part of the invention). In Comparative Example 1a, the structure is the same as in Example 1a except for the apex.

### [Example 2a]

A tire of Example 2a was obtained in the same manner as Example 1a, except that the outer end of the first apex was disposed radially outward of the end of the turned-up portion. In Table 1, the outer end of the first apex being located outward of the end of the turned-up portion is represented as "out".

### [Example 3a]

A tire of Example 3a was obtained in the same manner as Example 1a, except that the outer end of the first apex was disposed radially inward of the flange contact end. In Table 1, the outer end of the first apex being located inward of the flange contact end is represented as "in".

### [Example 4a]

A heavy duty pneumatic tire (tire size = 11R22.5) having the basic structure shown in FIG. 3 and having the specifications shown in Table 1 below was obtained. The heavy duty pneumatic tire has the same structure as in Example 1a, except that a recess was provided on the side surface.

In Example 4a, the ratio (TA/TB) of the minimum thickness TA from the ply main body to the recess relative to the virtual thickness TB, from the ply main body to the virtual side surface VL obtained on the assumption that the recess is not present, measured along a line segment (that is, the normal line NL) indicating the minimum thickness TA was set to 0.5.

### [Examples 5a and 6a]

Tires of Examples 5a and 6a were obtained in the same manner as Example 1a, except that the distance DB was set as shown in Table 2 below.

### [Examples 7a to 10a]

Tires of Examples 7a to 10a were obtained in the same manner as Example 1a, except that the distance HA was set as shown in Table 2 below.

### [PTL resistance]

Ply turn-up loose (PTL) resistance was evaluated as bead durability. In this evaluation, each tire was fitted onto a rim (size = 22.5×8.75) and filled with air. The internal pressure of the tire was adjusted to 1000 kPa. The tire was mounted to a bench tester having a drive drum. A vertical load of 76.53 kN was applied to the tire, running with the tire was performed at 20 km/h, and the running time until damage to the bead occurred and the occurrence state of PTL were confirmed. The results are shown in Tables 1 and 2 below as indexes with the value of the tire of Example 1a being defined as 100. A higher value represents that PTL is less likely to occur and the bead durability is better.

### [Rolling resistance coefficient (RRC)]

Each tire was fitted onto a rim (size = 22.5×8.75) and filled with air. The internal pressure of the tire was adjusted to 800 kPa. The tire was mounted to a rolling resistance tester. A vertical load of 26.72 kN was applied to the tire, running with the tire was performed at 80 km/h, and the rolling resistance was measured. The results are shown in Tables 1 and 2 below as indexes with the value of Example 1a being defined as 100. A higher value represents that the rolling resistance is lower, which is preferable.

### [CBU resistance]

Casing break-up (CBU) resistance was evaluated as bead durability. In this evaluation, each tire was fitted onto a rim (size = 22.5×8.75), 300 cc of water was put in the tire, and the tire was filled with air. The internal pressure of the tire was adjusted to 800 kPa. The tire was allowed to stand for 2 weeks in an atmosphere adjusted to 80°C. After this pretreatment, 300 cc of water was put in the tire, the tire was filled with air, and the internal pressure of the tire was adjusted to 1000 kPa. The tire was mounted to a bench tester having a drive drum. A vertical load of 76.53 kN was applied to the tire, running with the tire was performed at 20 km/h, and the running time until damage to the bead occurred and the occurrence state of CBU were confirmed. The results are shown in Tables 1 and 2 below as indexes with the value of the tire of Example 1a being defined as 100. A higher value represents that CBU is less likely to occur and the bead durability is better.

**[Table 1]**

| | Comparative Example 1a | Example 2a | Example 1a | Example 3a | Example 4a |
|---|---|---|---|---|---|
| Structure | FIG. 6 | FIG. 2 | FIG. 2 | FIG. 2 | FIG. 3 |
| TA/TB [-] | - | - | - | - | 0.5 |
| End of turned-up portion | - | out | in | in | in |
| Flange contact end | - | out | out | in | out |
| HA [mm] | - | 30 | 30 | 30 | 30 |
| DB [mm] | - | 1.5 | 1.5 | 1.5 | 1.5 |
| PTL resistance | 80 | 95 | 100 | 95 | 110 |
| RRC | 80 | 95 | 100 | 100 | 110 |
| CBU resistance | 100 | 100 | 100 | 100 | 100 |

**[Table 2]**

| | Example 5a | Example 6a | Example 7a | Example 8a | Example 9a | Example 10a |
|---|---|---|---|---|---|---|
| Structure | FIG. 2 | FIG. 2 | FIG. 2 | FIG. 2 | FIG. 2 | FIG. 2 |
| TA/TB [-] | - | - | - | - | - | - |
| End of turned-up portion | in | in | in | in | in | in |
| Flange contact end | out | out | out | out | out | out |
| HA [mm] | 30 | 30 | 10 | 15 | 45 | 50 |
| DB [mm] | 0.5 | 1 | 1.5 | 1.5 | 1.5 | 1.5 |
| PTL resistance | 100 | 100 | 95 | 99 | 99 | 95 |
| RRC | 100 | 100 | 100 | 100 | 99 | 95 |
| CBU resistance | 95 | 99 | 100 | 100 | 100 | 100 |

As shown in Tables 1 and 2, in the Examples, it is confirmed that, by using a short filler as the filler and using a round-shaped apex as the first apex, improvement of bead durability and reduction of rolling resistance are achieved while weight reduction is achieved. The Examples are highly rated, as compared to the Comparative Example. From the evaluation results, advantages of the present invention are clear.

### [Experiment 2]

### [Example 1b]

A heavy duty pneumatic tire (tire size = 11R22.5) having the basic structure shown in FIG. 4 and FIG. 5 and having the specifications shown in Table 3 below was obtained.

In Example 1b, the outer end of the first apex was disposed between the end of the turned-up portion and the flange contact end PF in the radial direction. In Table 3, the outer end of the first apex being located inward of the end of the turned-up portion is represented as "in", and the outer end of the first apex being located outward of the flange contact end is represented as "out".

In Example 1b, the distance HA in the radial direction from the radially inner end PA of the core to the outer end of the first apex was set to 30 mm. The distance DB from the axially inner end PB of the core to the carcass ply was set to 1.5 mm.

In Example 1b, the ratio (TA/TB) of the minimum thickness TA from the ply main body to the recess relative to the virtual thickness TB, from the ply main body to the virtual side surface VL obtained on the assumption that the recess is not present, measured along a line segment (that is, the normal line NL) indicating the minimum thickness TA was set to 0.5.

### [Comparative Example 1b]

A tire of Comparative Example 1b is the conventional tire (tire size = 11R22.5) shown in FIG. 6 (not part of the invention). In Comparative Example 1b, the apex was formed as a conventional apex. No recess is provided on the side surface.

### [Reference Example 2b]

A tire of Reference Example 2b was obtained in the same manner as Example 1b, except that no recess was provided on the side surface.

### [Example 2b]

A tire of Example 2b was obtained in the same manner as Example 1b, except that the outer end of the first apex was disposed radially outward of the end of the turned-up portion. In Table 3, the outer end of the first apex being located outward of the end of the turned-up portion is represented as "out".

### [Example 3b]

A tire of Example 3b was obtained in the same manner as Example 1b, except that the outer end of the first apex was disposed radially inward of the flange contact end. In Table 3, the outer end of the first apex being located inward of the flange contact end is represented as "in".

### [Examples 4b and 5b]

Tires of Examples 4b and 5b were obtained in the same manner as Example 1b, except that the distance DB was set as shown in Table 4 below.

### [Examples 6b to 9b]

Tires of Examples 6b to 9b were obtained in the same manner as Example 1b, except that the distance HA was set as shown in Table 4 below.

### [PTL resistance]

Ply turn-up loose (PTL) resistance was evaluated as bead durability. In this evaluation, each tire was fitted onto a rim (size = 22.5×8.75) and filled with air. The internal pressure of the tire was adjusted to 1000 kPa. The tire was mounted to a bench tester having a drive drum. A vertical load of 76.53 kN was applied to the tire, running with the tire was performed at 20 km/h, and the running time until damage to the bead occurred and the occurrence state of PTL were confirmed. The results are shown in Tables 3 and 4 below as indexes with the value of the tire of Example 1b being defined as 100. A higher value represents that PTL is less likely to occur and the bead durability is better.

### [Rolling resistance coefficient (RRC)]

Each tire was fitted onto a rim (size = 22.5×8.75) and filled with air. The internal pressure of the tire was adjusted to 800 kPa. The tire was mounted to a rolling resistance tester. A vertical load of 26.72 kN was applied to the tire, running with the tire was performed at 80 km/h, and the rolling resistance was measured. The results are shown in Tables 3 and 4 below as indexes with the value of Example 1b being defined as 100. A higher value represents that the rolling resistance is lower, which is preferable.

### [CBU resistance]

Casing break-up (CBU) resistance was evaluated as bead durability. In this evaluation, each tire was fitted onto a rim (size = 22.5×8.75), 300 cc of water was put in the tire, and the tire was filled with air. The internal pressure of the tire was adjusted to 800 kPa. The tire was allowed to stand for 2 weeks in an atmosphere adjusted to 80°C. After this pretreatment, 300 cc of water was put in the tire, the tire was filled with air, and the internal pressure of the tire was adjusted to 1000 kPa. The tire was mounted to a bench tester having a drive drum. A vertical load of 76.53 kN was applied to the tire, running with the tire was performed at 20 km/h, and the running time until damage to the bead occurred and the occurrence state of CBU were confirmed. The results are shown in Tables 3 and 4 below as indexes with the value of the tire of Example 1b being defined as 100. A higher value represents that CBU is less likely to occur and the bead durability is better.

### [Ozone crack resistance]

Each tire was allowed to stand for 2 weeks in an atmosphere adjusted to 80°C. After this pretreatment, the tire was fitted onto a rim (size = 22.5×8.75) and filled with air. The internal pressure of the tire was adjusted to 800 kPa. The tire was mounted to a bench tester having a drive drum. A vertical load of 26.72 kN was applied to the tire, running with the tire was performed at 40 km/h in an atmosphere having an ozone concentration adjusted to 50 pphm, and the occurrence state of ozone cracks was confirmed. The results are shown in Tables 3 and 4 below as indexes with the value of the tire of Example 1b being defined as 100. A higher value represents that an ozone crack is less likely to occur.

**[Table 3]**

| | Comparative Example 1b | Reference Example 2b | Example 2b | Example 1b | Example 3b |
|---|---|---|---|---|---|
| Structure | FIG. 6 | - | FIG. 5 | FIG. 5 | FIG. 5 |
| TA/TB [-] | - | - | 0.5 | 0.5 | 0.5 |
| End of turned-up portion | - | in | out | in | in |
| Flange contact end | - | out | out | out | in |
| HA [mm] | - | 30 | 30 | 30 | 30 |
| DB [mm] | - | 1.5 | 1.5 | 1.5 | 1.5 |
| PTL resistance | 80 | 100 | 105 | 110 | 105 |
| RRC | 80 | 100 | 105 | 110 | 110 |
| CBU resistance | 100 | 100 | 100 | 100 | 100 |
| Ozone crack resistance | 100 | 100 | 100 | 100 | 100 |

**[Table 4]**

| | Example 4b | Example 5b | Example 6b | Example 7b | Example 8b | Example 9b |
|---|---|---|---|---|---|---|
| Structure | FIG. 5 | FIG. 5 | FIG. 5 | FIG. 5 | FIG. 5 | FIG. 5 |
| TA/TB [-] | 0.5 | 0.5 | 0.5 | 0.5 | 0.5 | 0.5 |
| End of turned-up portion | in | in | in | in | in | in |
| Flange contact end | out | out | out | out | out | out |
| HA [mm] | 30 | 30 | 10 | 15 | 45 | 50 |
| DB [mm] | 0.5 | 1 | 1.5 | 1.5 | 1.5 | 1.5 |
| PTL resistance | 110 | 110 | 105 | 109 | 109 | 105 |
| RRC | 110 | 110 | 110 | 110 | 109 | 105 |
| CBU resistance | 95 | 99 | 100 | 100 | 100 | 100 |
| Ozone crack resistance | 100 | 100 | 95 | 99 | 100 | 100 |

As shown in Tables 3 and 4, in the Examples, it is confirmed that, by using a round-shaped apex as the first apex and providing a recess on the side surface, improvement of bead durability and reduction of rolling resistance are achieved while weight reduction is achieved. The Examples are highly rated, as compared to the Comparative Example. From the evaluation results, advantages of the present invention are clear.

### INDUSTRIAL APPLICABILITY

The above-described technology for achieving improvement of bead durability and reduction of rolling resistance while achieving weight reduction can be applied to various tires.

## Claims

1. A heavy duty pneumatic tire (32, 102, 232) comprising:
a pair of beads (40, 240);
a carcass ply (82, 282) having a ply main body (84, 284) that extends on and between one bead (40, 240) and the other bead (40, 240), and turned-up portions (86, 286) that are connected to the ply main body (84, 284) and turned around the beads (40, 240) from an inner side toward an outer side in an axial direction; and
a pair of fillers (52, 252) that are located outward of the turned-up portions (86, 286) in the axial direction and that include metal cords, wherein
each bead (40, 240) includes a core (64, 264), a first apex (70, 270) that surrounds the core (64, 264), and a second apex (72, 272) that is located outward of the first apex (70, 270) in the radial direction,
an outer periphery of the first apex (70, 270) has a rounded contour, and
the first apex (70, 270) has a higher durometer type A hardness than the second apex (72, 272),
the first apex (70, 270) has a round shape;
**characterized in that** in a radial direction, a first end (92, 292) of each filler (52, 252) is located inward of a bead base line (BBL), and a second end (94, 294) of each filler (52, 252) is located between an end of the turned-up portion (86, 286) and the bead base line (BBL).

2. The heavy duty pneumatic tire (32, 102, 232) according to claim 1, wherein
when a position, on each side surface (34, 234) of the tire (32, 102, 232), corresponding to an outer end of a contact surface between the side surface and a flange (LF) of a rim to which the tire (32, 102, 232) is fitted, is defined as a flange contact end (PF),
in the radial direction, an outer end (96, 308) of the first apex (70, 270) is located inward of the end (88, 288) of the turned-up portion (86, 286) and located outward of the flange contact end (PF).

3. The heavy duty pneumatic tire (32, 102, 232) according to claim 1 or 2, wherein a distance in the radial direction from a radially inner end (PA) of the core (64, 264) to an outer end (96, 308) of the first apex (70, 270) is not less than 15 mm and not greater than 45 mm.

4. The heavy duty pneumatic tire (32, 102, 232) according to any one of claims 1 to 3, wherein a distance from an axially inner end (PB) of the core (64, 264) to the carcass ply (82, 282) is not less than 1 mm.

5. The heavy duty pneumatic tire (32, 102, 232) according to any one of claims 1 to 4, wherein a recess (104, 296) is provided on a zone of each side surface of the tire (32, 102, 232) between a maximum width position and the end (88, 288) of the turned-up portion (86, 286).

6. The heavy duty pneumatic tire (32, 102, 232) according to claim 1, wherein a recess (104, 296) is provided on a zone of each side surface of the tire (32, 102, 232) between a maximum width position and the end (88, 288) of the turned-up portion (86, 286).

7. The heavy duty pneumatic tire (32, 102, 232) according to claim 6, wherein
when a position, on each side surface of the tire (32, 102, 232), corresponding to an outer end of a contact surface between the side surface and a flange of a rim to which the tire (32, 102, 232) is fitted, is defined as a flange contact end (PF),
in the radial direction, an outer end (96, 308) of the first apex (70, 270) is located inward of the end of the turned-up portion (86, 286) and located outward of the flange contact end (PF).

8. The heavy duty pneumatic tire (32, 102, 232) according to claim 6 or 7, wherein a distance in the radial direction from a radially inner end (PA) of the core (64, 264) to an outer end (96, 308) of the first apex (70, 270) is not less than 15 mm and not greater than 45 mm.

9. The heavy duty pneumatic tire (32, 102, 232) according to any one of claims 5 to 8, wherein a distance from an axially inner end (PB) of the core (64, 264) to the carcass ply (82, 282) is not less than 1 mm.

10. The heavy duty pneumatic tire (32, 102, 232) according to any one of claims 6 to 9, wherein a ratio of a minimum thickness from the ply main body (84, 284) to the recess (104, 296) relative to a virtual thickness, from the ply main body (84, 284) to a virtual side surface (VL) obtained on the assumption that the recess (104, 296) is not present, measured along a line segment indicating the minimum thickness is not less than 0.3 and not greater than 0.7.

11. The heavy duty pneumatic tire (32, 102, 232) according to any one of claims 6 to 10, wherein a distance in the radial direction from the end (88, 288) of the turned-up portion (86, 286) to an inner end of the recess (104, 296) is not less than 10 mm and not greater than 20 mm.

12. The heavy duty pneumatic tire (32, 102, 232) according to any one of claims 6 to 11, wherein
the recess (104, 296) includes a bottom portion (110, 302), an outer boundary portion (112, 304) located outward of the bottom portion (110, 302) in the radial direction, and an inner boundary portion (114, 306) located inward of the bottom portion (110, 302) in the radial direction,
a profile of the outer boundary portion (112, 304) is represented by a circular arc that projects outward and that has a radius not less than 40 mm, and
a profile of the inner boundary portion (114, 306) is represented by a circular arc that projects outward and that has a radius not less than 40 mm.

13. The heavy duty pneumatic tire (32, 102, 232) according to claim 12, wherein a profile of the bottom portion (110, 302) is represented by a circular arc that projects inward.

14. The heavy duty pneumatic tire (32, 102, 232) according to claim 12, wherein a profile of the bottom portion (110, 302) is represented by a straight line.

## Patentansprüche

1. Schwerlastluftreifen (32, 102, 232), umfassend:
ein Paar Wülste (40, 240);
eine Karkasslage (82, 282) mit einem Lagenhauptkörper (84, 284), der sich auf und zwischen einem Wulst (40, 240) und dem anderen Wulst (40, 240) erstreckt, und Umschlagabschnitten (86, 286), die mit dem Lagenhauptkörper (84, 284) verbunden sind und um die Wülste (40, 240) von einer Innenseite zu einer Außenseite in einer axialen Richtung umgeschlagen sind; und
ein Paar Fülllagen (52, 252), die sich außen von den Umschlagabschnitten (86, 286) in der axialen Richtung befinden und die Metallkorde umfassen, wobei
jeder Wulst (40, 240) einen Kern (64, 264), einen ersten Kernreiter (70, 270), der den Kern (64, 264) umgibt, und einen zweiten Kernreiter (72, 272), der sich außen von dem ersten Kernreiter (70, 270) in der radialen Richtung befindet, umfasst,
ein Außenumfang des ersten Kernreiters (70, 270) eine abgerundete Kontur aufweist, und
der erste Kernreiter (70, 270) eine höhere Durometer-Typ-A-Härte als der zweite Kernreiter (72, 272) aufweist,
der erste Kernreiter (70, 270) eine runde Form aufweist;
**dadurch gekennzeichnet, dass** sich in einer radialen Richtung ein erstes Ende (92, 292) jeder Fülllage (52, 252) innen von einer Wulstbasislinie (BBL) befindet und sich ein zweites Ende (94, 294) jeder Fülllage (52, 252) zwischen einem Ende des Umschlagabschnitts (86, 286) und der Wulstbasislinie (BBL) befindet.

2. Schwerlastluftreifen (32, 102, 232) nach Anspruch 1, wobei
wenn eine Position auf jeder Seitenfläche (34, 234) des Reifens (32, 102, 232), die einem äußeren Ende einer Kontaktfläche zwischen der Seitenfläche und einem Horn (LF) einer Felge entspricht, auf die der Reifen (32, 102, 232) aufgezogen ist, als ein Hornkontaktende (PF) definiert ist,
sich in der radialen Richtung ein äußeres Ende (96, 308) des ersten Kernreiters (70, 270) innen von dem Ende (88, 288) des Umschlagabschnitts (86, 286) befindet und sich außen von dem Hornkontaktende (PF) befindet.

3. Schwerlastluftreifen (32, 102, 232) nach Anspruch 1 oder 2, wobei ein Abstand in der radialen Richtung von einem radial inneren Ende (PA) des Kerns (64, 264) zu einem äußeren Ende (96, 308) des ersten Kernreiters (70, 270) nicht weniger als 15 mm und nicht mehr als 45 mm beträgt.

4. Schwerlastluftreifen (32, 102, 232) nach einem der Ansprüche 1 bis 3, wobei ein Abstand von einem axial inneren Ende (PB) des Kerns (64, 264) zu der Karkasslage (82, 282) nicht weniger als 1 mm beträgt.

5. Schwerlastluftreifen (32, 102, 232) nach einem der Ansprüche 1 bis 4, wobei eine Aussparung (104, 296) auf einer Zone jeder Seitenfläche des Reifens (32, 102, 232) zwischen einer Position maximaler Breite und dem Ende (88, 288) des Umschlagabschnitts (86, 286) vorgesehen ist.

6. Schwerlastluftreifen (32, 102, 232) nach Anspruch 1, wobei eine Aussparung (104, 296) auf einer Zone jeder Seitenfläche des Reifens (32, 102, 232) zwischen einer Position maximaler Breite und dem Ende (88, 288) des Umschlagabschnitts (86, 286) vorgesehen ist.

7. Schwerlastluftreifen (32, 102, 232) nach Anspruch 6, wobei
wenn eine Position auf jeder Seitenfläche des Reifens (32, 102, 232), die einem äußeren Ende einer Kontaktfläche zwischen der Seitenfläche und einem Horn einer Felge entspricht, auf die der Reifen (32, 102, 232) aufgezogen ist, als ein Hornkontaktende (PF) definiert ist,
sich in der radialen Richtung ein äußeres Ende (96, 308) des ersten Kernreiters (70, 270) innen von dem Ende des Umschlagabschnitts (86, 286) befindet und sich außen von dem Hornkontaktende (PF) befindet.

8. Schwerlastluftreifen (32, 102, 232) nach Anspruch 6 oder 7, wobei ein Abstand in der radialen Richtung von einem radial inneren Ende (PA) des Kerns (64, 264) zu einem äußeren Ende (96, 308) des ersten Kernreiters (70, 270) nicht weniger als 15 mm und nicht mehr als 45 mm beträgt.

9. Schwerlastluftreifen (32, 102, 232) nach einem der Ansprüche 5 bis 8, wobei ein Abstand von einem axial inneren Ende (PB) des Kerns (64, 264) zu der Karkasslage (82, 282) nicht weniger als 1 mm beträgt.

10. Schwerlastluftreifen (32, 102, 232) nach einem der Ansprüche 6 bis 9, wobei ein Verhältnis einer minimalen Dicke von dem Lagenhauptkörper (84, 284) zu der Aussparung (104, 296) relativ zu einer virtuellen Dicke von dem Lagenhauptkörper (84, 284) zu einer virtuellen Seitenfläche (VL), die unter der Annahme erhalten wird, dass die Aussparung (104, 296) nicht vorhanden ist, gemessen entlang eines Liniensegments, das die minimale Dicke angibt, nicht weniger als 0,3 und nicht mehr als 0,7 beträgt.

11. Schwerlastluftreifen (32, 102, 232) nach einem der Ansprüche 6 bis 10, wobei ein Abstand in der radialen Richtung von dem Ende (88, 288) des Umschlagabschnitts (86, 286) zu einem inneren Ende der Aussparung (104, 296) nicht weniger als 10 mm und nicht mehr als 20 mm beträgt.

12. Schwerlastluftreifen (32, 102, 232) nach einem der Ansprüche 6 bis 11, wobei
die Aussparung (104, 296) einen Bodenabschnitt (110, 302), einen äußeren Grenzabschnitt (112, 304), der sich außen von dem Bodenabschnitt (110, 302) in der radialen Richtung befindet, und einen inneren Grenzabschnitt (114, 306), der sich innen von dem Bodenabschnitt (110, 302) in der radialen Richtung befindet, umfasst,
ein Profil des äußeren Grenzabschnitts (112, 304) durch einen Kreisbogen dargestellt ist, der nach außen vorsteht und der einen Radius von nicht weniger als 40 mm aufweist, und
ein Profil des inneren Grenzabschnitts (114, 306) durch einen Kreisbogen dargestellt ist, der nach außen vorsteht und der einen Radius von nicht weniger als 40 mm aufweist.

13. Schwerlastluftreifen (32, 102, 232) nach Anspruch 12, wobei ein Profil des Bodenabschnitts (110, 302) durch einen Kreisbogen dargestellt ist, der nach innen vorsteht.

14. Schwerlastluftreifen (32, 102, 232) nach Anspruch 12, wobei ein Profil des Bodenabschnitts (110, 302) durch eine gerade Linie dargestellt ist.

## Revendications

1. Pneumatique pour véhicule poids lourd (32, 102, 232) comprenant :
une paire de talons (40, 240) ;
une nappe de carcasse (82, 282) ayant un corps principal de nappe (84, 284) qui s'étend sur un talon et entre un talon (40, 240) et l'autre talon (40, 240) et des parties relevées (86, 286) qui sont reliées au corps principal de nappe (84, 284) et enroulées autour des talons (40, 240) à partir d'un côté intérieur vers un côté extérieur dans une direction axiale ; et
une paire de remplissages (52, 252) qui sont situés à l'extérieur des parties relevées (86, 286) dans la direction axiale et qui comportent des câbles métalliques, dans lequel
chaque talon (40, 240) comporte un noyau (64, 264), un premier sommet (70, 270) qui entoure le noyau (64, 264), et un second sommet (72, 272) qui est situé à l'extérieur par rapport au premier sommet (70, 270) dans la direction radiale,
une périphérie extérieure du premier sommet (70, 270) a un contour arrondi, et
le premier sommet (70,270) a une dureté plus élevée au duromètre de type A que le second sommet (72, 272),
le premier sommet (70, 270) a une forme arrondie ;
**caractérisé en ce que**, dans une direction radiale, une première extrémité (92, 292) de chaque remplissage (52, 252) est située à l'intérieur d'une ligne de base de talon (BBL) et une seconde extrémité (94, 294) de chaque remplissage (52, 252) est située entre une extrémité de la partie relevée (86, 286) et la ligne de base de talon (BBL).

2. Pneumatique pour véhicule poids lourd (32, 102, 232) selon la revendication 1, dans lequel,
lorsqu'une position, sur chaque surface latérale (34, 234) du pneu (32, 102, 232), correspondant à une extrémité extérieure d'une surface de contact entre la surface latérale et un rebord (LF) d'une jante à laquelle le pneu (32, 102, 232) est fixé, est définie comme une extrémité de contact de rebord (PF),
dans la direction radiale, une extrémité extérieure (96, 308) du premier sommet (70, 270) est située à l'intérieur de l'extrémité (88, 288) de la partie relevée (86, 286) et située à l'extérieur de l'extrémité de contact de rebord (PF).

3. Pneumatique pour véhicule poids lourd (32, 102, 232) selon la revendication 1 ou la revendication 2, dans lequel une distance dans la direction radiale à partir d'une extrémité intérieure radialement (PA) du noyau (64, 264) jusqu'à une extrémité extérieure (96, 308) du premier sommet (70, 270) n'est pas inférieure à 15 mm et non supérieure à 45 mm.

4. Pneumatique pour véhicule poids lourd (32, 102, 232) selon l'une quelconque des revendications 1 à 3, dans lequel une distance à partir d'une extrémité intérieure axialement (PB) du noyau (64, 264) jusqu'à la nappe de carcasse (82, 282) n'est pas inférieure à 1 mm.

5. Pneumatique pour véhicule poids lourd (32, 102, 232) selon l'une quelconque des revendications 1 à 4, dans lequel un renfoncement (104, 296) est prévu sur une zone de chaque surface latérale du pneu (32, 102, 232) entre une position en largeur maximale et l'extrémité (88, 288) de la partie relevée (86, 286).

6. Pneumatique pour véhicule poids lourd (32, 102, 232) selon la revendication 1, dans lequel un renfoncement (104, 296) est prévu sur une zone de chaque surface latérale du pneu (32, 102, 232) entre une position en largeur maximale et l'extrémité (88, 288) de la partie relevée (86, 286).

7. Pneumatique pour véhicule poids lourd (32, 102, 232) selon la revendication 6, dans lequel,
lorsqu'une position, sur chaque surface latérale du pneu (32, 102, 232), correspondant à une extrémité extérieure d'une surface de contact entre la surface latérale et un rebord d'une jante à laquelle le pneu (32, 102, 232) est fixé, est définie comme une extrémité de contact de rebord (PF), dans la direction radiale, une extrémité extérieure (96, 308) du premier sommet (70, 270) est située à l'intérieur de l'extrémité de la partie relevée (86, 286) et située à l'extérieur de l'extrémité de contact de rebord (PF).

8. Pneumatique pour véhicule poids lourd (32, 102, 232) selon la revendication 6 ou la revendication 7, dans lequel une distance dans la direction radiale à partir d'une extrémité intérieure radialement (PA) du noyau (64, 264) jusqu'à une extrémité extérieure (96, 308) du premier sommet (70, 270) n'est pas inférieure à 15 mm et non supérieur à 45 mm.

9. Pneumatique pour véhicule poids lourd (32, 102, 232) selon l'une quelconque des revendications 5 à 8, dans lequel une distance à partir d'une extrémité intérieure axialement (PB) du noyau (64, 264) jusqu'à la nappe de carcasse (82, 282) n'est pas inférieure à 1 mm.

10. Pneumatique pour véhicule poids lourd (32, 102, 232) selon l'une quelconque des revendications 6 à 9, dans lequel un ratio d'une épaisseur minimale à partir du corps principal de nappe (84, 284) jusqu'au renfoncement (104, 296) par rapport à une épaisseur virtuelle à partir du corps principal de nappe (84, 284) jusqu'à une surface latérale virtuelle (VL) obtenue en admettant que le renfoncement (104, 296) n'est pas présent, mesurée le long d'un segment de ligne indiquant l'épaisseur minimale, n'est pas inférieur à 0,3 et non supérieur à 0,7.

11. Pneumatique pour véhicule poids lourd (32, 102, 232) selon l'une quelconque des revendications 6 à10, dans lequel une distance dans la direction radiale à partir de l'extrémité (88, 288) de la partie relevée (86, 286) jusqu'à une extrémité intérieure du renfoncement (104, 296) n'est pas inférieure à 10 mm et non supérieure à 20 mm.

12. Pneumatique pour véhicule poids lourd (32, 102, 232) selon l'une quelconque des revendications 6 à 11, dans lequel
le renfoncement (104, 296) comporte une partie inférieure (110, 302), une partie limite extérieure (112, 304) située à l'extérieur de la partie inférieure (110, 302) dans la direction radiale, et une partie limite intérieure (114, 306) située à l'intérieur de la partie inférieure (110, 302) dans le direction radiale, un profil de la partie limite extérieure (112, 304) est représenté par un arc de cercle qui se projette à l'extérieur et a un rayon non inférieur à 40 mm, et un profil de la partie limite intérieure (114, 306) est représenté par un arc de cercle qui se projette à l'extérieur et a un rayon non inférieur à 40 mm.

13. Pneumatique pour véhicule poids lourd (32, 102, 232) selon la revendication 12, dans lequel un profil de la partie inférieure (110, 302) est représenté par un arc de cercle qui se projette à l'intérieur.

14. Pneumatique pour véhicule poids lourd (32, 102, 232) selon la revendication 12, dans lequel un profil de la partie inférieure (110, 302) est représenté par une ligne droite.
